# EUROPEAN PATENT SPECIFICATION

(11) **EP 3 709 488 B1**
(45) Date of publication and mention of the grant of the patent: **23.11.2022**
(21) Application number: 20161749.5
(22) Date of filing: 09.03.2020
(51) Int. Cl.: H02M 1/08, H02M 1/36, H02M 3/335

(54) **VOLTAGE REGULATOR SYSTEM**
SPANNUNGSREGLERSYSTEM
SYSTÈME DE RÉGULATEUR DE TENSION

(30) Priority: 11.03.2019 TW 108108036
(43) Date of publication of application: 16.09.2020
(73) Proprietor: Macroblock, Inc., Hsinchu 30072 (TW)
(72) Inventor: KUO, Chen-Yuan, 30072 Hsinchu (TW); LIAO, Shi-Jie, 30072 Hsinchu (TW); CHENG, Hung-I, 30072 Hsinchu (TW); HSIEH, Chi-Min, 30072 Hsinchu (TW)
(74) Representative: Brevalex

(56) References cited:
- US-A1- 2009 010 027
- US-A1- 2014 016 364
- US-A1- 2017 373 604

## Description

The disclosure relates to power supply, and more particularly to a voltage regulator system.

In order to attain a high power factor of a conventional voltage regulator system with primary side regulation (i.e., an input current received by the conventional voltage regulator system is as in-phase as possible with an input voltage received thereby), a system bandwidth of the conventional voltage regulator system is generally designed to be lower than a frequency of the input voltage. Therefore, when electric loading of the conventional voltage regulator system changes, the conventional voltage regulator system responses with time delay to the change of the loading, resulting in instability of an output voltage generated by the conventional voltage regulator system.

Moreover, the conventional voltage regulator system generates a feedback signal by dividing a voltage across an auxiliary winding that is at the primary side, and uses a blanking time to avoid noise contained in the feedback signal. However, when the loading is light, the feedback signal would be fully covered up by the blanking time, such that the output voltage cannot be detected from the feedback signal, resulting in the output voltage that is in an abnormal Document US 2009/010027 discloses a converter able to cope with loading changes.

Therefore, an object of the disclosure is to provide a voltage regulator system that can alleviate at least one drawback of the prior art.

According to the disclosure, the voltage regulator system includes a power converter and a control device. The power converter is adapted to be coupled to a power source and a load, is for receiving an input voltage from the power source, is for further receiving a pulse signal, converts the input voltage into an output voltage for receipt by the load based on the pulse signal, and generates a detection voltage related to the output voltage. Power transferred from the power source to the load through the power converter is related to a pulse width of the pulse signal. The control device includes a comparison capacitor, a current generator and a pulse signal generator. The comparison capacitor provides a comparison voltage. The current generator is coupled to the power converter for receiving the detection voltage therefrom, is further coupled to the comparison capacitor, and is operable to sink current from the comparison capacitor or to source current to the comparison capacitor based on the detection voltage. The current generator starts to sink current from the comparison capacitor so as to discharge the comparison capacitor when determining that the detection voltage is higher than a predetermined first fast transient reference voltage. The current generator starts to source current to the comparison capacitor so as to charge the comparison capacitor when determining that the detection voltage is lower than a predetermined second fast transient reference voltage. The predetermined second fast transient reference voltage is lower than the first fast transient reference voltage . The pulse signal generator is coupled to the comparison capacitor for receiving the comparison voltage therefrom, is further coupled to the power converter, and generates the pulse signal for receipt by the power converter based on the comparison voltage in such a way that the pulse width of the pulse signal is related to the comparison voltage.

Other features and advantages of the disclosure will become apparent in the following detailed description of the embodiment with reference to the accompanying drawings, of which:
FIG. 1 is a circuit block diagram illustrating an embodiment of a voltage regulator system according to the disclosure;
FIG. 2 is a circuit block diagram illustrating a control device of the embodiment;
FIG. 3 is a circuit diagram illustrating a current generator of the control device;
FIG. 4 is a circuit block diagram illustrating a burst mode circuit of the control device;
FIG. 5 is a circuit block diagram illustrating a pulse trigger circuit of the control device;
FIG. 6 is a timing diagram illustrating operations of the pulse trigger circuit;
FIG. 7 is a circuit diagram illustrating a hiccup circuit of the control device;
FIG. 8 is a circuit block diagram illustrating a falling edge detection circuit of the control device;
FIG. 9 is a timing diagram illustrating operations of the falling edge detection circuit; and
FIGS. 10-14 are timing diagrams illustrating operations of the embodiment.

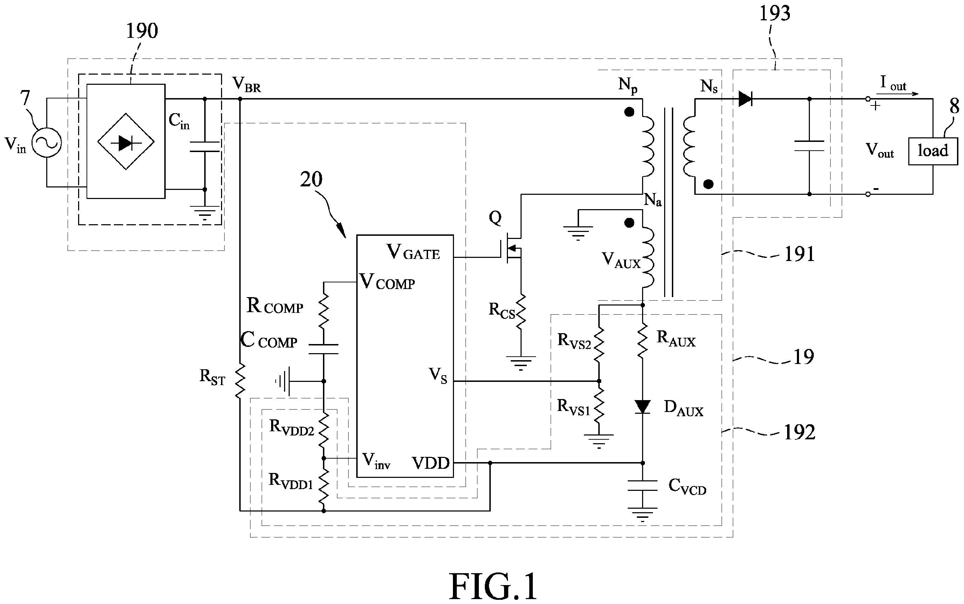

Referring to FIG. 1, an embodiment of a voltage regulator system according to the disclosure includes a power converter 19, a control device 20 and a startup resistor (R_{ST}).

The power converter 19 is adapted to be coupled to a power source 7 and a load 8, is for receiving an input voltage (Vᵢₙ) from the power source 7, is for further receiving a pulse signal (V_{GATE}), and converts the input voltage (Vᵢₙ) into an output voltage (Vₒᵤₜ) for receipt by the load 8 based on the pulse signal (V_{GATE}). Power transferred from the power source 7 to the load 8 through the power converter 19 is related to a pulse width of the pulse signal (V_{GATE}). The power converter 19 further generates at least one detection voltage.

In this embodiment, the input voltage (Vᵢₙ) is alternating current (AC); the output voltage (Vₒᵤₜ) is direct current (DC); the power converter 19 includes a first rectifying-and-filtering circuit 190, a transformer 191, a switch (Q), a resistor (R_{CS}), a second rectifying-and-filtering circuit 193 and a voltage detection circuit 192; and two detection voltages including a first detection voltage (Vᵢₙᵥ) and a second detection voltage (V_{S}) are generated.

The first rectifying-and-filtering circuit 190 is adapted to be coupled to the power source 7 for receiving the input voltage (Vᵢₙ) therefrom, and rectifies and filters the input voltage (Vᵢₙ) to generate a rectified voltage (V_{BR}) .

The transformer 191 includes a primary winding (Nₚ), a secondary winding (Nₛ) and an auxiliary winding (Nₐ). Each of the windings (Nₚ, Nₛ, Nₐ) has a first terminal and a second terminal. The first terminals of the windings (Nₚ, Nₛ, Nₐ) have the same voltage polarity. The first terminal of the primary winding (Nₚ) is coupled to the first rectifying-and-filtering circuit 190 for receiving the rectified voltage (V_{BR}) therefrom. The first terminal of the auxiliary winding (Nₐ) is coupled to ground. The auxiliary winding (Nₐ) provides an auxiliary voltage (V_{AUX}) at the second terminal thereof.

The switch (Q) (e.g., an N-type metal oxide semiconductor field effect transistor (nMOSFET)) has a first terminal (e.g., a drain terminal) that is coupled to the second terminal of the primary winding (Nₚ), a second terminal (e.g., a source terminal), and a control terminal (e.g., a gate terminal) that is for receiving the pulse signal (V_{GATE}). The pulse signal (V_{GATE}) transitions between an active state (e.g., being at a logic "1" level) and an inactive state (e.g., being at a logic "0" level) . The switch (Q) conducts when the pulse signal (V_{GATE}) is in the active state (i.e., within each pulse of the pulse signal (V_{GATE})), and does not conduct when the pulse signal (V_{GATE}) is in the inactive state (i.e., outside each pulse of the pulse signal (V_{GATE})). The resistor (R_{CS}) is coupled between the second terminal of the switch (Q) and ground.

The second rectifying-and-filtering circuit 193 is coupled to the secondary winding (Nₛ), is adapted to be further coupled to the load 8, and rectifies and filters a voltage across the secondary winding (Nₛ) to generate the output voltage (Vₒᵤₜ) for receipt by the load 8.

The detection circuit 192 is coupled to the second terminal of the auxiliary winding (Nₐ) for receiving the auxiliary voltage (V_{AUX}) therefrom, and generates the first and second detection voltages (Vᵢₙᵥ, V_{S}) and a first supply voltage (VDD) (e.g., 12V ≤ VDD ≤ 18V) based on the auxiliary voltage (V_{AUX}). In this embodiment, the detection circuit 192 includes five resistors (R_{AUX}, R_{VDD1}, R_{VDD2}, R_{VS1}, R_{VS2}), a diode (D_{AUX}) and a capacitor (C_{VCD}). The resistor (R_{AUX}), the diode (D_{AUX}) and the capacitor (C_{VCD}) are coupled in series between the second terminal of the auxiliary winding (Nₐ) and ground, with the resistor (R_{AUX}) coupled to the second terminal of the auxiliary winding (Nₐ), the capacitor (C_{VCD}) coupled to ground, an anode of the diode (D_{AUX}) coupled to the resistor (R_{AUX}), and a cathode of the diode (D_{AUX}) coupled to the capacitor (C_{VCD}). The first supply voltage (VDD) is provided at a common node of the diode (D_{AUX}) and the capacitor (C_{VCD}). The resistors (R_{VDD1}, R_{VDD2}) are coupled in series between ground and the common node of the diode (D_{AUX}) and the capacitor (C_{VCD}), with the resistor (R_{VDD2}) coupled to ground and the resistor (R_{VDD1}) coupled to the common node of the diode (D_{AUX}) and the capacitor (C_{VCD}). The first detection voltage (Vᵢₙᵥ) is provided at a common node of the resistors (R_{VDD1}, R_{VDD2}), is related to the output voltage (Vₒᵤₜ), and changes slowly with the output voltage (Vₒᵤₜ). The resistors (Rᵥₛ₁, Rᵥₛ₂) are coupled in series between the second terminal of the auxiliary winding (Nₐ) and ground, with the resistor (Rᵥₛ₂) coupled to the second terminal of the auxiliary winding (Nₐ) and the resistor (Rᵥₛ₁) coupled to ground. The second detection voltage (V_{S}) is provided at a common node of the resistors (R_{VS1}, R_{VS2}), is related to the output voltage (Vₒᵤₜ) and transition of the pulse signal (V_{GATE}), and changes quickly with the output voltage (Vₒᵤₜ).

The control device 20 is coupled to the power converter 19, is powered by the first supply voltage (VDD) from the power converter 19, and generates the pulse signal (V_{GATE}) for receipt by the power converter 19 based on the first and second detection voltages (Vᵢₙᵥ, V_{S}) from the power converter 19.

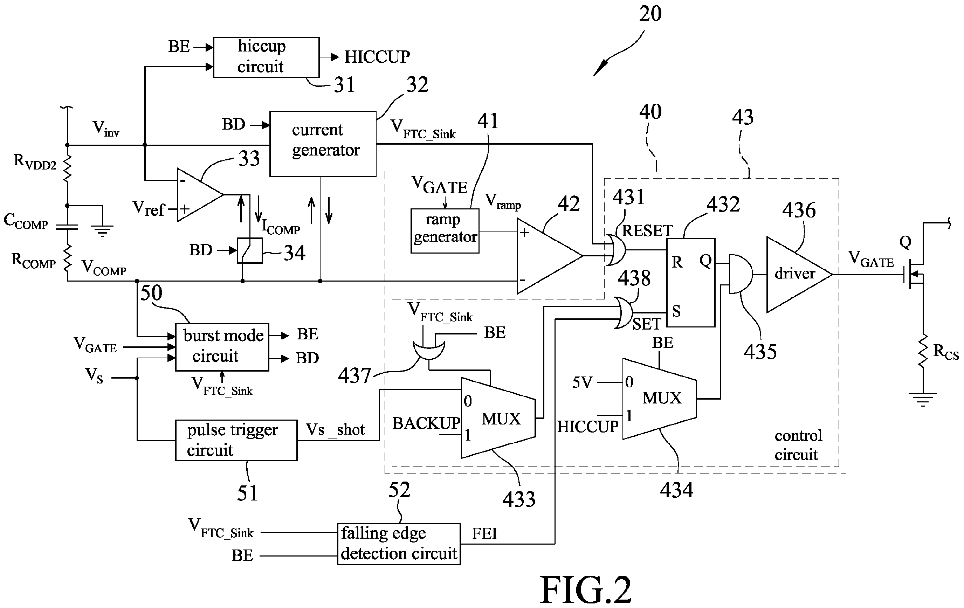

Referring to FIG. 2, in this embodiment, the control device 20 includes a comparison resistor (R_{COMP}), a comparison capacitor (C_{COMP}), a current generator 32, a transconductance amplifier 33, a switch 34, a burst mode circuit 50, a pulse trigger circuit 51, a hiccup circuit 31, a falling edge detection circuit 52 and a pulse signal generator 40.

The comparison resistor (R_{COMP}) has a first terminal and a second terminal. The comparison capacitor (C_{COMP}) is coupled between the second terminal of the comparison resistor (R_{COMP}) and ground. The comparison resistor (R_{COMP}) and the comparison capacitor (C_{COMP}) cooperatively provide a comparison voltage (V_{COMP}) at the first terminal of the comparison resistor (R_{COMP}).

The current generator 32 is coupled to the common node of the resistors (R_{VDD1}, R_{VDD2}) (see FIG. 1) for receiving the first detection voltage (Vᵢₙᵥ) therefrom, is for further receiving a burst disable signal (BD), and is further coupled to the first terminal of the comparison resistor (R_{COMP}). Based on the first detection voltage (Vᵢₙᵥ) and the burst disable signal (BD), the current generator 32 is operable to sink current from the comparison capacitor (C_{COMP}) through the comparison resistor (R_{COMP}) or to source current to the comparison capacitor (C_{COMP}) through the comparison resistor (R_{COMP}). The current generator 32 further generates a sink enable signal (V_{FTC_Sink}) based on the first detection voltage (Vᵢₙᵥ). The current sinking performed by the current generator 32 is related to the sink enable signal (V_{FTC_Sink}).

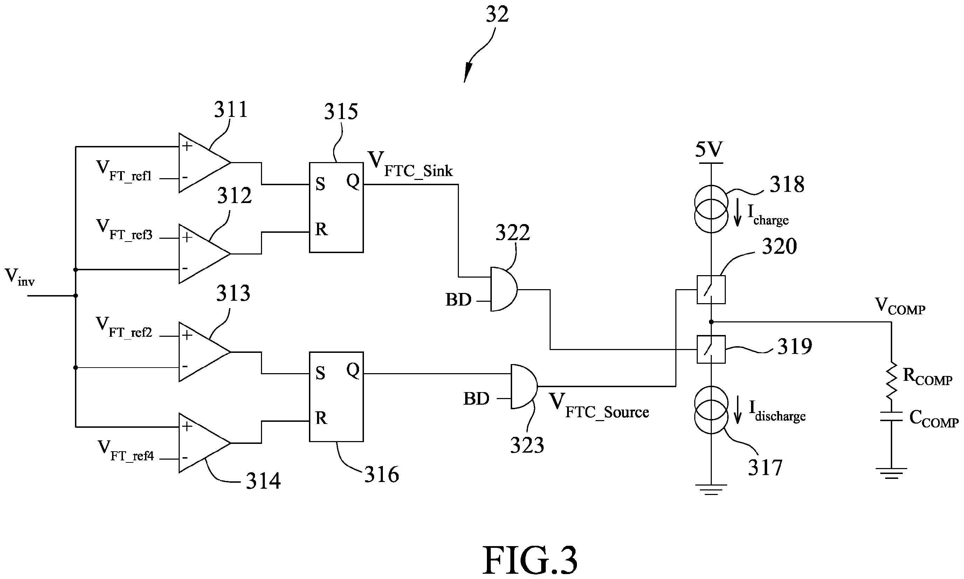

Referring to FIG. 3, in this embodiment, the current generator 32 includes a first comparator 311, a second comparator 312, a third comparator 313, a fourth comparator 314, a first RS flip-flop 315, a second RS flip-flop 316, a first AND gate 322, a second AND gate 323, a first switch 319, a second switch 320, a first current source 317 and a second current source 318. The first comparator 311 has a non-inverting input terminal that is coupled to the common node of the resistors (R_{VDD1}, R_{VDD2}) (see FIG. 1) for receiving the first detection voltage (Vᵢₙᵥ) therefrom, an inverting input terminal that is for receiving a predetermined first fast transient reference voltage (V_{FT_ref1}), and an output terminal. The third comparator 313 has a non-inverting input terminal that is for receiving a predetermined second fast transient reference voltage (V_{FT_ref2}), an inverting input terminal that is coupled to the common node of the resistors (R_{VDD1}, R_{VDD2}) (see FIG. 1) for receiving the first detection voltage (Vᵢₙᵥ) therefrom, and an output terminal. The predetermined second fast transient reference voltage (V_{FT_ref2}) is lower than the predetermined first fast transient reference voltage (V_{FT_ref1}). The second comparator 312 has a non-inverting input terminal that is for receiving a predetermined third fast transient reference voltage (V_{FT_ref3}), an inverting input terminal that is coupled to the common node of the resistors (R_{VDD1}, R_{VDD2}) (see FIG. 1) for receiving the first detection voltage (Vᵢₙᵥ) therefrom, and an output terminal. The predetermined third fast transient reference voltage (V_{FT_ref3}) is lower than the predetermined first fast transient reference voltage (V_{FT_ref1}). The fourth comparator 314 has a non-inverting input terminal that is coupled to the common node of the resistors (R_{VDD1}, R_{VDD2}) (see FIG. 1) for receiving the first detection voltage (Vᵢₙᵥ) therefrom, an inverting input terminal that is for receiving a predetermined fourth fast transient reference voltage (V_{FT_ref4}), and an output terminal. The predetermined fourth fast transient reference voltage (V_{FT_ref4}) is lower than the predetermined third fast transient reference voltage (V_{FT_ref3}), and is higher than the predetermined second fast transient reference voltage (V_{FT_ref2}). The first RS flip-flop 315 has a set terminal that is coupled to the output terminal of the first comparator 311, a reset terminal that is coupled to the output terminal of the second comparator 312, and an output terminal that provides the sink enable signal (V_{FTC_Sink}). The second RS flip-flop 316 has a set terminal that is coupled to the output terminal of the third comparator 313, a reset terminal that is coupled to the output terminal of the fourth comparator 314, and an output terminal . The first AND gate 322 has a first input terminal that is coupled to the output terminal of the first RS flip-flop 315 for receiving the sink enable signal (V_{FTC_Sink}) therefrom, a second input terminal that is for receiving the burst disable signal (BD), and an output terminal. The second AND gate 323 has a first input terminal that is coupled to the output terminal of the second RS flip-flop 316, a second input terminal that is for receiving the burst disable signal (BD), and an output terminal that provides a source enable signal (V_{FTC_Source}). The first switch 319 has a first terminal that is coupled to the first terminal of the comparison resistor (R_{COMP}), a second terminal, and a control terminal that is coupled to the output terminal of the first AND gate 322. The second switch 320 has a first terminal, a second terminal that is coupled to the first terminal of the comparison resistor (R_{COMP}), and a control terminal that is coupled to the output terminal of the second AND gate 323 for receiving the source enable signal (V_{FTC_Source}) therefrom. The first current source 317 is coupled to the second terminal of the first switch 319, and provides a discharge current (I_{discharge}) that flows through the first switch 319 from the first terminal thereof to the second terminal thereof when the first switch 319 conducts. The second current source 318 is coupled to the first terminal of the second switch 320, and provides a charge current (I_{charge}) that flows through the second switch 320 from the first terminal thereof to the second terminal thereof when the second switch 320 conducts.

In operation, the first RS flip-flop 315 sets the sink enable signal (V_{FTC_Sink}) to the logic "1" level when the first comparator 311 determines that the first detection voltage (Vᵢₙᵥ) is higher than the predetermined first fast transient reference voltage (V_{FT_ref1}), and resets the sink enable signal (V_{FTC_Sink}) to the logic "0" level when the second comparator 312 determines that the first detection voltage (Vᵢₙᵥ) is lower than the predetermined third fast transient reference voltage (V_{FT_ref3}). The second RS flip-flop 316 sets a signal provided at the output terminal thereof to the logic "1" level when the third comparator 313 determines that the first detection voltage (Vᵢₙᵥ) is lower than the predetermined second fast transient reference voltage (V_{FT_ref2}), and resets the signal provided at the output terminal thereof to the logic "0" level when the fourth comparator 314 determines that the first detection voltage (Vᵢₙᵥ) is higher than the predetermined fourth fast transient reference voltage (V_{FT_ref4}). In a case where the burst disable signal (BD) is at the logic "1" level, the first switch 319 transitions from non-conduction to conduction when the sink enable signal (V_{FTC_Sink}) transitions from the logic "0" level to the logic "1" level, and therefore the first current source 317 starts to sink the discharge current (I_{discharge}) from the comparison capacitor (C_{COMP}) through the compensation resistor (R_{COMP}) and the conducting first switch 319 so as to discharge the comparison capacitor (C_{COMP}); the first switch 319 transitions from conduction to non-conduction when the sink enable signal (V_{FTC_Sink}) transitions from the logic "1" level to the logic "0" level, and therefore the current sinking stops; the second switch 320 transitions from non-conduction to conduction when the signal provided at the output terminal of the second RS flip-flop 316 transitions from the logic "0" level to the logic "1" level, and therefore the second current source 318 starts to source the charge current (I_{charge}) to the comparison capacitor (C_{COMP}) through the conducting second switch 320 and the compensation resistor (R_{COMP}) so as to charge the comparison capacitor (C_{COMP}); and the second switch 320 transitions from conduction to non-conduction when the signal provided at the output terminal of the second RS flip-flop 316 transitions from the logic "1" level to the logic "0" level, and therefore the current sourcing stops. In a case where the burst disable signal (BD) is at the logic "0" level, none of the first and second switches 319, 320 conducts, and therefore the compensation capacitor (C_{COMP}) is neither discharged by the first current source 317 nor charged by the second current source 318.

Referring back to FIG. 2, the transconductance amplifier 33 has a non-inverting input terminal that is for receiving a predetermined internal reference voltage (V_{ref}), an inverting input terminal that is coupled to the common node of the resistors (R_{VDD1}, R_{VDD2}) (see FIG. 1) for receiving the first detection voltage (Vᵢₙᵥ) therefrom, and an output terminal that provides a compensation current (I_{COMP}). The predetermined internal reference voltage (V_{ref}) is lower than the predetermined third fast transient reference voltage (V_{FT_ref3}), and is higher than the predetermined fourth fast transient reference voltage (V_{FT_ref4}). The switch 34 has a first terminal that is coupled to the output terminal of the transconductance amplifier 33, a second terminal that is coupled to the first terminal of the compensation resistor (R_{COMP}), and a control terminal that is for receiving the burst disable signal (BD). In operation, in the case where the burst disable signal (BD) is at the logic "1" level, the switch 34 conducts, and the transconductance amplifier 33 sources the compensation current (I_{COMP}) to the compensation capacitor (C_{COMP}) through the conducting switch 34 and the compensation resistor (R_{COMP}) so as to charge the compensation capacitor (C_{COMP}) when the first detection voltage (Vᵢₙᵥ) is lower than the predetermined internal reference voltage (V_{ref}), and sinks the compensation current (I_{COMP}) from the compensation capacitor (C_{COMP}) through the compensation resistor (R_{COMP}) and the conducting switch 34 so as to discharge the compensation capacitor (C_{COMP}) otherwise. In the case where the burst disable signal (BD) is at the logic "0" level, the switch 34 does not conduct, and the compensation capacitor (C_{COMP}) is neither charged nor discharged by the transconductance amplifier 33.

The burst mode circuit 50 is coupled to the first terminal of the compensation resistor (R_{COMP}) for receiving the compensation voltage (V_{COMP}) therefrom, is further coupled to the common node of the resistors (R_{VS1}, R_{VS2}) (see FIG. 1) for receiving the second detection voltage (V_{S}) therefrom, is further coupled to the output terminal of the first RS flip-flop 315 (see FIG. 3) for receiving the sink enable signal (V_{FTC_Sink}) therefrom, and is for further receiving the pulse signal (V_{GATE}). The burst mode circuit 50 generates a burst enable signal (BE) and the burst disable signal (BD) based on a comparison between the comparison voltage (V_{COMP}) and a predetermined first burst reference voltage (V_{Burst_ref1}) when the sink enable signal (V_{FTC_Sink}) is at the logic "0" level (i.e., corresponding to that the current generator 32 does not sink current from the comparison capacitor (C_{COMP})), and based on a comparison between the second detection voltage (V_{S}) and a predetermined second burst reference voltage (V_{Burst_ref2}) when detecting a falling edge of the pulse signal (V_{GATE}). The burst enable signal (BE) and the burst disable signal (BD) are complementary to each other.

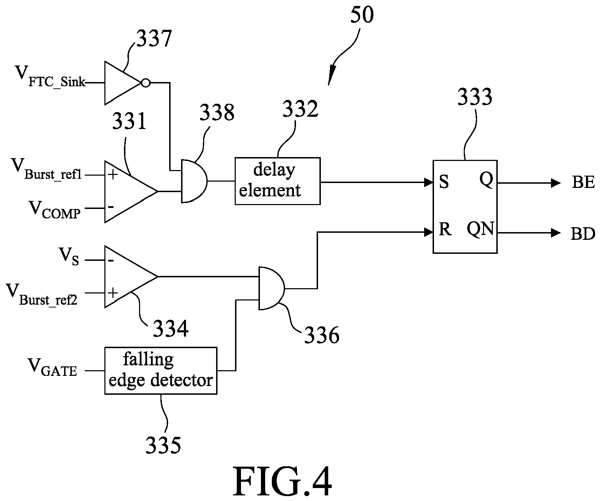

Referring to FIG. 4, in this embodiment, the burst mode circuit 50 includes a first comparator 331, an inverter 337, a first AND gate 338, a delay element 332, a second comparator 334, a falling edge detector 335, a second AND gate 336 and an RS flip-flop 333. The first comparator 331 has a non-inverting input terminal that is for receiving the predetermined first burst reference voltage (V_{Burst_ref1}), an inverting input terminal that is coupled to the first terminal of the comparison resistor (R_{COMP}) (see FIG. 1) for receiving the comparison voltage (V_{COMP}) therefrom, and an output terminal. The inverter 337 has an input terminal that is coupled to the output terminal of the first RS flip-flop 315 (see FIG. 3) for receiving the sink enable signal (V_{FTC_Sink}) therefrom, and an output terminal. The first AND gate 338 has a first input terminal that is coupled to the output terminal of the first comparator 331, a second input terminal that is coupled to the output terminal of the inverter 337, and an output terminal. The delay element 332 has an input terminal that is coupled to the output terminal of the first AND gate 338, and an output terminal, and introduces a predetermined burst time delay between a signal received at the input terminal thereof and a signal provided at the output terminal thereof. The second comparator 334 has a non-inverting input terminal that is for receiving the predetermined second burst reference voltage (V_{Burst_ref2}), an inverting input terminal that is coupled to the common node of the resistors (R_{VS1}, R_{VS2}) (see FIG. 1) for receiving the second detection voltage (V_{S}) therefrom, and an output terminal. The falling edge detector (335) has an input terminal that is for receiving the pulse signal (V_{GATE}), and an output terminal. The second AND gate 336 has a first input terminal that is coupled to the output terminal of the second comparator 334, a second input terminal that is coupled to the output terminal of the falling edge detector 335, and an output terminal. The RS flip-flop 333 has a set terminal that is coupled to the output terminal of the delay element 332, a reset terminal that is coupled to the output terminal of the second AND gate 336, a non-inverting output terminal that provides the burst enable signal (BE), and an inverting output terminal that provides the burst disable signal (BD). Each of the second input terminal of the first AND gate 322 (see FIG. 3), the second input terminal of the second AND gate 323 (see FIG. 3) and the control terminal of the switch 34 (see FIG. 2) is coupled to the inverting output terminal of the RS flip-flop 333 for receiving the burst disable signal (BD) therefrom. In operation, the RS flip-flop 333 sets the burst enable signal (BE) and the burst disable signal (BD) respectively to the logic "1" level and the logic "0" level during a first time period that lags a second time period by the predetermined burst time delay. During the second time period, both of the following conditions are met: the first comparator 331 determines that the compensation voltage (V_{COMP}) is lower than the predetermined first burst reference voltage (V_{Burst_ref1}); and the sink enable signal (V_{FTC_Sink}) is at the logic "0" level. The RS flip-flop 333 resets the burst enable signal (BE) and the burst disable signal (BD) respectively to the logic "0" level and the logic "1" level when both of the following conditions are met: the second comparator 334 determines that the second detection voltage (V_{S}) is lower than the predetermined second burst reference voltage (V_{Burst_ref2}); and the falling edge detector 335 detects the falling edge of the pulse signal (V_{GATE}). Referring back to FIG. 2, the pulse trigger circuit 51 is coupled to the common node of the resistors (R_{VS1}, Rᵥₛ₂) (see FIG. 1) for receiving the second detection voltage (V_{S}) therefrom, and generates a first indication signal (V_{S_shot}) based on a comparison between the second detection voltage (V_{S}) and a predetermined threshold reference voltage (V_{ref_Vs}).

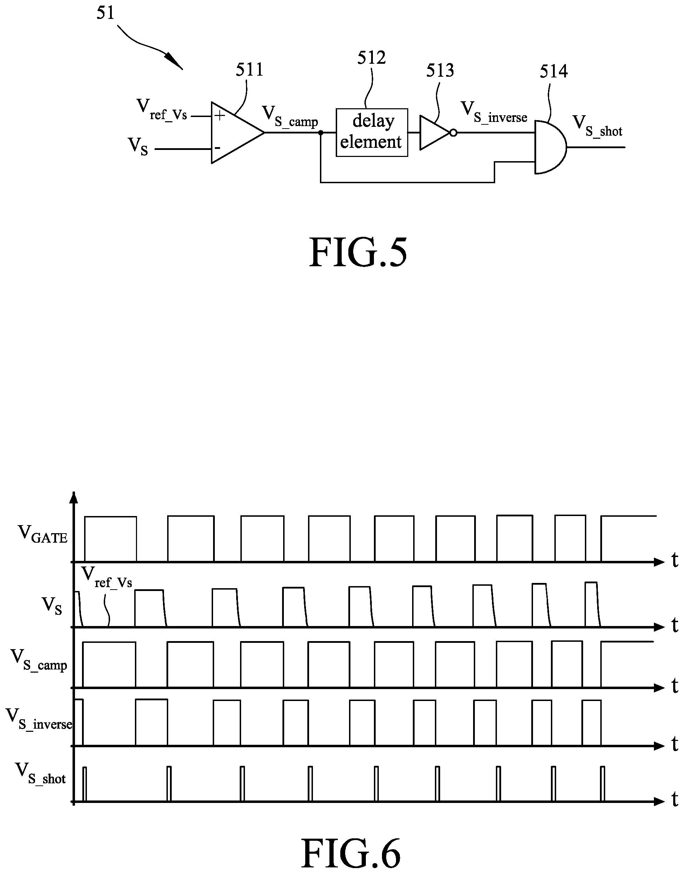

Referring to FIG. 5, in this embodiment, the pulse trigger circuit 51 includes a comparator 511, a delay element 512, an inverter 513 and an AND gate 514. The comparator 511 has a non-inverting input terminal that is for receiving the predetermined threshold reference voltage (V_{ref_Vs}), an inverting input terminal that is coupled to the common node of the resistors (R_{VS1}, Rᵥₛ₂) (see FIG. 1) for receiving the second detection voltage (V_{S}) therefrom, and an output terminal that provides a signal (V_{S_camp}). The delay element 512 has an input terminal that is coupled to the output terminal of the comparator 511 for receiving the signal (V_{S_camp}) therefrom, and an output terminal, and introduces a time delay (e.g., 10ns) between the signal (V_{S_camp}) and a signal provided at the output terminal thereof. The inverter 513 has an input terminal that is coupled to the output terminal of the delay element 512, and an output terminal that provides a signal (V_{S_inverse}). The AND gate 514 has a first input terminal that is coupled to the output terminal of the inverter 513 for receiving the signal (V_{S_inverse}) therefrom, a second input terminal that is coupled to the output terminal of the comparator 511 for receiving the signal (V_{S_camp}) therefrom, and an output terminal that provides the first indication signal (V_{S_shot}) . FIG. 6 illustrates the second detection voltage (V_{S}), the signal (V_{S_camp}), the signal (V_{S_inverse}) and the first indication signal (V_{S_shot}) . It is known from FIG. 6 that the first indication signal (V_{S_shot}) indicates when the second detection voltage (V_{S}) decreases below the predetermined threshold reference voltage (V_{ref_Vs}).

Referring back to FIG. 2, the hiccup circuit 31 is coupled to the common node of the resistors (R_{VDD1}, R_{VDD2}) (see FIG. 1) for receiving the first detection voltage (Vᵢₙᵥ) therefrom, and is further coupled to the non-inverting output terminal of the RS flip-flop 333 (see FIG. 4) for receiving the burst enable signal (BE) therefrom. The hiccup circuit 31 selects one of the first detection voltage (Vᵢₙᵥ) and a ground voltage based on the burst enable signal (BE), and generates a hiccup signal (HICCUP) based on a comparison between a predetermined third burst reference voltage (V_{Burst_ref3}) and a selected one of the first detection voltage (Vᵢₙᵥ) and the ground voltage, and based on a comparison between a predetermined fourth burst reference voltage (V_{Burst_ref4})and the selected one of the first detection voltage (Vᵢₙᵥ) and the ground voltage. The predetermined fourth burst reference voltage (V_{Burst_ref4}) is higher than the predetermined third burst reference voltage (V_{Burst_ref3}), and is lower than the predetermined second fast transient reference voltage (V_{FT_ref2}).

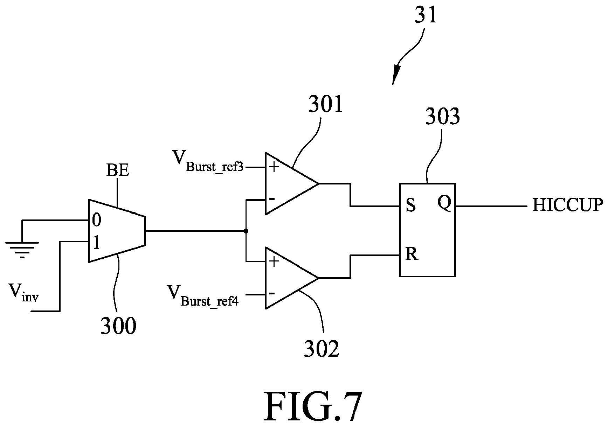

Referring to FIG. 7, in this embodiment, the hiccup circuit 31 includes a multiplexer 300, a first comparator 301, a second comparator 302 and an RS flip-flop 303. The multiplexer 300 has a first input terminal that is coupled to ground for receiving the ground voltage therefrom, a second input terminal that is coupled to the common node of the resistors (R_{VDD1}, R_{VDD2}) (see FIG. 1) for receiving the first detection voltage (Vᵢₙᵥ) therefrom, a control terminal that is coupled to the non-inverting output terminal of the RS flip-flop 333 (see FIG. 4) for receiving the burst enable signal (BE) therefrom, and an output terminal. The multiplexer 300 outputs the ground voltage at the output terminal thereof when the burst enable signal (BE) is at the logic "0" level, and outputs the first detection voltage (Vᵢₙᵥ) at the output terminal thereof when the burst enable signal (BE) is at the logic "1" level. The first comparator 301 has a non-inverting input terminal that is for receiving the predetermined third burst reference voltage (V_{Burst_ref3}), an inverting input terminal that is coupled to the output terminal of the multiplexer 300, and an output terminal. The second comparator 302 has a non-inverting input terminal that is coupled to the output terminal of the multiplexer 300, an inverting input terminal that is for receiving the predetermined fourth burst reference voltage (V_{Burst_ref4}), and an output terminal. The RS flip-flop 303 has a set terminal that is coupled to the output terminal of the first comparator 301, a reset terminal that is coupled to the output terminal of the second comparator 302, and an output terminal that provides the hiccup signal (HICCUP). In operation, in a case where the burst enable signal (BE) is at the logic "1" level, the RS flip-flop 303 sets the hiccup signal (HICCUP) to the logic "1" level when the first comparator 301 determines that the first detection voltage (Vᵢₙᵥ) is lower than the predetermined third burst reference voltage (V_{Burst_ref3}), and resets the hiccup signal (HICCUP) to the logic "0" level when the second comparator 302 determines that the first detection voltage (Vᵢₙᵥ) is higher than the predetermined fourth burst reference voltage (V_{Burst_ref4}). In a case where the burst enable signal (BE) is at the logic "0" level, the RS flip-flop 303 sets the hiccup signal (HICCUP) to the logic "1" level since the first comparator 301 determines that the ground voltage is lower than the predetermined third burst reference voltage (V_{Burst_ref3}). It should be noted that, in another embodiment, the multiplexer 300 may be omitted, and each of the inverting input terminal of the first comparator 301 and the non-inverting input terminal of the second comparator 302 may be coupled to the common node of the resistors (R_{VDD1}, R_{VDD2}) (see FIG. 1) for receiving the first detection voltage (Vᵢₙᵥ) therefrom.

Referring back to FIG. 2, the falling edge detection circuit 52 is coupled to the non-inverting output terminal of the RS flip-flop 333 (see FIG. 4) for receiving the burst enable signal (BE) therefrom, is further coupled to the output terminal of the first RS flip-flop 315 (see FIG. 3) for receiving the sink enable signal (V_{FTC_Sink}) therefrom, and detects respective falling edges of the burst enable signal (BE) and the sink enable signal (V_{FTC_Sink}) to generate a second indication signal (FEI).

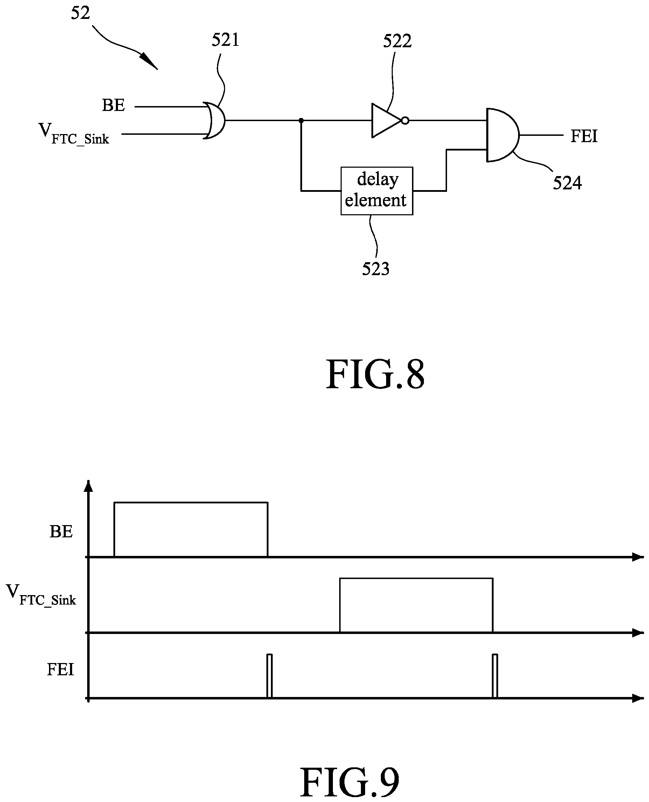

Referring to FIG. 8, in this embodiment, the falling edge detection circuit 52 includes an OR gate 521, an inverter 522, a delay element 523 and an AND gate 524. The OR gate 521 has a first input terminal that is coupled to the non-inverting output terminal of the RS flip-flop 333 (see FIG. 4) for receiving the burst enable signal (BE) therefrom, a second input terminal that is coupled to the output terminal of the first RS flip-flop 315 (see FIG. 3) for receiving the sink enable signal (V_{FTC_Sink}) therefrom, and an output terminal. The inverter 522 has an input terminal that is coupled to the output terminal of the OR gate 521, and an output terminal. The delay element 523 has an input terminal that is coupled to the output terminal of the OR gate 521, and an output terminal, and introduces a time delay (e.g., 10ns) between a signal received at the input terminal thereof and a signal provided at the output terminal thereof. The AND gate 524 has a first input terminal that is coupled to the output terminal of the inverter 522, a second input terminal that is coupled to the output terminal of the delay element 523, and an output terminal that provides the second indication signal (FEI) . FIG. 9 illustrates the burst enable signal (BE), the sink enable signal (V_{FTC_Sink}) and the second indication signal (FEI). It is known from FIG. 9 that the second indication signal (FEI) indicates the falling edge of each of the burst enable signal (BE) and the sink enable signal (V_{FTC_Sink}).

Referring back to FIG. 2, the pulse signal generator 40 is coupled to the first terminal of the comparison resistor (R_{COMP}) for receiving the comparison voltage (V_{COMP}) therefrom, is further coupled to the output terminal of the first RS flip-flop 315 (see FIG. 3) for receiving the sink enable signal (V_{FTC_Sink}) therefrom, is further coupled to the non-inverting output terminal of the RS flip-flop 333 (see FIG. 4) for receiving the burst enable signal (BE) therefrom, is further coupled to the output terminal of the AND gate 514 (see FIG. 5) for receiving the first indication signal (V_{S_shot}) therefrom, is further coupled to the output terminal of the RS flip-flop 303 (see FIG. 7) for receiving the hiccup signal (HICCUP) therefrom, is further coupled to the output terminal of the AND gate (see FIG. 8) for receiving the second indication signal (FEI) therefrom, and is for further receiving a backup signal (BACKUP) with a constant frequency. The pulse signal generator 40 generates the pulse signal (V_{GATE}) based on the comparison voltage (V_{COMP}), the sink enable signal (V_{FTC_Sink}), the burst enable signal (BE), the first indication signal (V_{S_shot}), the hiccup signal (HICCUP), the second indication signal (FEI) and the backup signal (BACKUP) in such a way that the pulse width of the pulse signal (V_{GATE}) is related to any one of the comparison voltage (V_{COMP}) and the sink enable signal (V_{FTC_Sink}), and that a pulse start point of the pulse signal (V_{GATE}) is related to any one of the followings: when the second detection voltage (V_{S}) decreases below the predetermined threshold reference voltage (V_{ref_Vs}) (see FIG. 51) as indicated by the first indication signal (V_{S_shot}); the falling edge of the burst enable signal (BE) as indicated by the second indication signal (FEI) ; the falling edge of the sink enable signal (V_{FTC_Sink}) as indicated by the second indication signal (FEI) ; and the backup signal (BACKUP).

In this embodiment, the pulse signal generator 40 includes a ramp generator 41, a comparator 42 and a control circuit 43.

The ramp generator 41 is for receiving the pulse signal (V_{GATE}), and generates a ramp voltage (Vᵣₐₘₚ) that increases (e.g., increases linearly) within each pulse of the pulse signal (V_{GATE}), and that is zero outside of each pulse of the pulse signal (V_{GATE}).

The comparator 42 is coupled to the ramp generator 41 and the first terminal of the comparison resistor (R_{COMP}) for receiving the ramp voltage (Vᵣₐₘₚ) and the comparison voltage (V_{COMP}) respectively therefrom, and compares the ramp voltage (Vᵣₐₘₚ) and the comparison voltage (V_{COMP}) to generate a comparison signal. The comparison signal is at the logic "0" level when the ramp voltage (Vᵣₐₘₚ) is lower than the comparison voltage (V_{COMP}), and is at the logic "1" level otherwise.

The control circuit 43 includes a first OR gate 431, a second OR gate 437, a first multiplexer (MUX) 433, a third OR gate 438, an RS flip-flop 432, a second multiplexer 434, an AND 435 and a driver 436. The first OR gate 431 has a first input terminal that is coupled to the output terminal of the comparator 42 for receiving the comparison signal therefrom, a second input terminal that is coupled to the output terminal of the first RS flip-flop 315 (see FIG. 3) for receiving the sink enable signal (V_{FTC_Sink}) therefrom, and an output terminal that provides a signal (RESET). The second OR gate 437 has a first input terminal that is coupled to the output terminal of the first RS flip-flop 315 (see FIG. 3) for receiving the sink enable signal (V_{FTC_Sink}) therefrom, a second input terminal that is coupled to the non-inverting output terminal of the RS flip-flop 333 (see FIG. 4) for receiving the burst enable signal (BE) therefrom, and an output terminal. The first multiplexer 433 has a first input terminal that is coupled to the output terminal of the AND gate 514 (see FIG. 5) for receiving the first indication signal (V_{S_shot}) therefrom, a second input terminal that is for receiving the backup signal (BACKUP), a control terminal that is coupled to the output terminal of the second OR gate 437, and an output terminal. The first multiplexer 433 outputs the first indication signal (V_{S_shot}) at the output terminal thereof when a signal received at the control terminal thereof is at the logic "0" level, and outputs the backup signal (BACKUP) at the output terminal thereof when the signal received at the control terminal thereof is at the logic "1" level. The third OR gate 438 has a first input terminal that is coupled to the output terminal of the first multiplexer 433, a second input terminal that is coupled to the output terminal of the AND gate (see FIG. 8) for receiving the second indication signal (FEI) therefrom, and an output terminal that provides a signal (SET). The RS flip-flop 432 has a set terminal that is coupled to the output terminal of the third OR gate 438 for receiving the signal (SET) therefrom, a reset terminal that is coupled to the output terminal of the first OR gate 431 for receiving the signal (RESET) therefrom, and an output terminal. The second multiplexer 434 has a first input terminal that is for receiving a second supply voltage (e.g., 5V), a second input terminal that is coupled to the output terminal of the RS flip-flop 303 (see FIG. 7) for receiving the hiccup signal (HICCUP) therefrom, a control terminal that is coupled to the non-inverting output terminal of the RS flip-flop 333 (see FIG. 4) for receiving the burst enable signal (BE) therefrom, and an output terminal. The second supply voltage corresponds to the logic "1" level, and may be derived from the first supply voltage (VDD) (see FIG. 1) . The second multiplexer 434 outputs the second supply voltage at the output terminal thereof when the burst enable signal (BE) is at the logic "0" level, and outputs the hiccup signal (HICCUP) at the output terminal thereof when the burst enable signal (BE) is at the logic "1" level. The AND gate 435 has a first input terminal that is coupled to the output terminal of the RS flip-flop 432, a second input terminal that is coupled to the output terminal of the second multiplexer 434, and an output terminal. The driver 436 has an input terminal that is coupled to the output terminal of the AND gate 435, and an output terminal that provides the pulse signal (V_{GATE}). Each of the control terminal of the switch (Q), the input terminal of the falling edge detector 335 (see FIG. 4) and the ramp generator 41 is coupled to the output terminal of the driver 436 for receiving the pulse signal (V_{GATE}) therefrom.

In operation, in a first case where the burst enable signal (BE) is at the logic "0" level, or in a second case where the burst enable signal (BE) is at the logic "1" level, and where the hiccup signal (HICCUP) is at the logic "1" level, the pulse signal (V_{GATE}) can transition between the logic "0" level and the logic "1" level. Otherwise, the pulse signal (V_{GATE}) is constantly at the logic "0" level. In any one of the first and second cases, the pulse signal (V_{GATE}) is set to the logic "1" level when any one of the following conditions is met: (a) both of the sink enable signal (V_{FTC_Sink}) and the burst enable signal (BE) are at the logic "0" level, and the first indication signal (V_{S_shot}) indicates that the second detection voltage (V_{S}) decreases below the predetermined threshold reference voltage (V_{ref_Vs}) (see FIG. 5); (b) at least one of the sink enable signal (V_{FTC_Sink}) and the burst enable signal (BE) is at the logic "1" level, and the backup signal (BACKUP) is at the logic "1" level; and (c) the second indication signal (FEI) indicates the falling edge of any one of the sink enable signal (V_{FTC_Sink}) and the burst enable signal (BE). In any one of the first and second cases, the pulse signal (V_{GATE}) is reset to the logic "0" level when any one of the following conditions is met: (a) the sink enable signal (V_{FTC_Sink}) is at the logic "1" level; and (b) the comparison signal indicates that the ramp voltage (Vᵣₐₘₚ) is not lower than the comparison voltage (V_{COMP}). In other words, the pulse width of the pulse signal (V_{GATE}) is related to any one of the sink enable signal (V_{FTC_Sink}) and the comparison signal.

Referring back to FIG. 1, the startup resistor (R_{ST}) has a first terminal that is coupled to the first rectifying-and-filtering circuit 190 for receiving the rectified voltage (V_{BR}) therefrom, and a second terminal that is coupled to the common node of the diode (D_{AUX}) and the capacitor (C_{VCD}). The startup resistor (R_{ST}) assists in startup of the voltage regulator system of this embodiment.

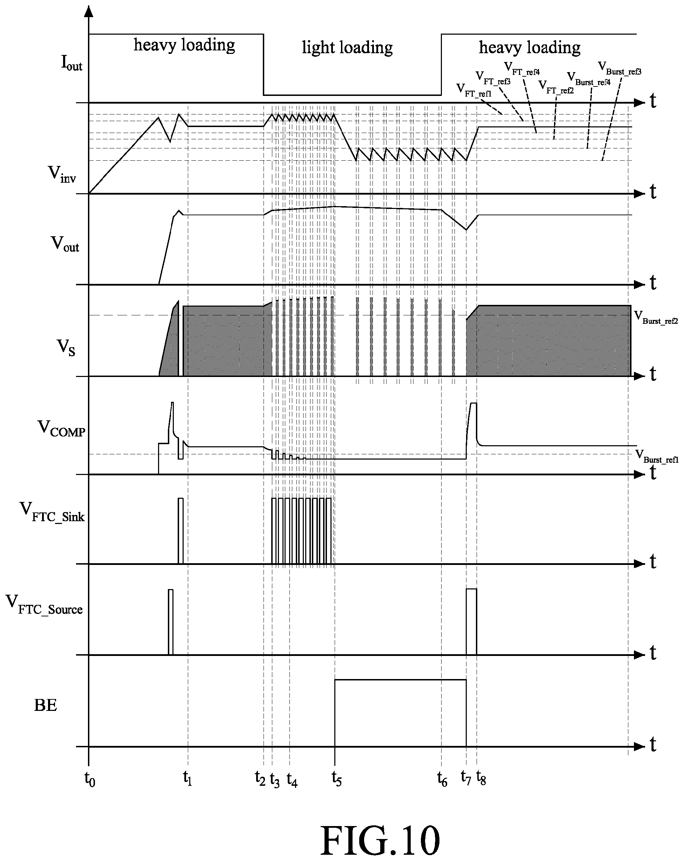

Referring to FIGS. 1, 2 and 10-14, operations of the voltage regulator system of this embodiment are described in detail below. In FIGS. 10-14, only positive half of the second detection voltage (V_{S}) is depicted. It is assumed that the input voltage (Vᵢₙ) is supplied to the voltage regulator system from time point t₀, and that the voltage regulator has heavy loading during a period from time point t₀ to time point t₂ and after time point t₆, and has light loading during a period from time point t₂ to time point t₆.

As shown in FIGS. 10, during a period from time point t₀ to time point t₁, the voltage regulator system starts up, and reaches a steady state at time point t₁.

As shown in FIGS. 10, during a period from time point t₁ to time point t₂, the voltage regulator system remains in the steady state. The output voltage (Vₒᵤₜ) is constant. The first detection voltage (Vᵢₙᵥ) is constant, and is equal to the predetermined internal reference voltage (V_{ref}). The second detection voltage (V_{S}) transitions between a positive peak level that is related to the output voltage (Vₒᵤₜ) and a negative peak level that is related to the rectified voltage (V_{BR}), and the positive peak level is constant . The sink enable signal (V_{FTC_Sink}), the source enable signal (V_{FTC_Source}) and the burst enable signal (BE) are at the logic "0" level. The comparison voltage (V_{COMP}) is constant, and is higher than the first burst reference voltage (V_{Burst_ref1}). The pulse signal (V_{GATE}) transitions from the logic "0" level to the logic "1" level when the first indication signal (V_{S_shot}) indicates that the second detection voltage (V_{S}) decreases below the predetermined threshold reference voltage (V_{ref_Vs}) (see FIG. 5), and transitions from the logic "1" level to the logic "0" level when the ramp voltage (Vᵣₐₘₚ) increases above the comparison voltage (V_{COMP}).

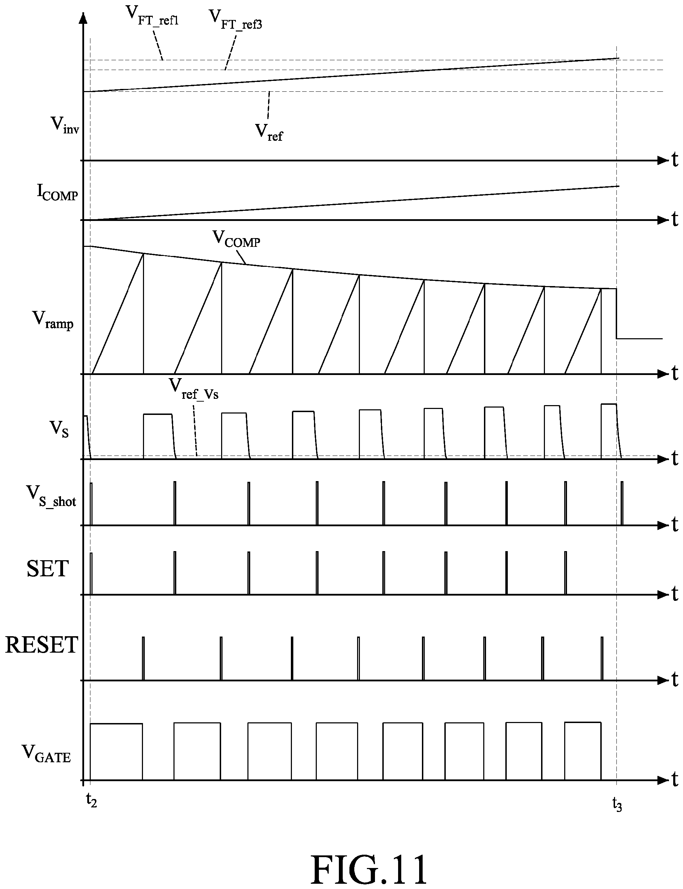

As shown in FIGS. 10 and 11, during a period from time point t₂ to time point t₃, in response to the change from heavy loading to light loading, the voltage regulator system leaves the steady state. The output voltage (Vₒᵤₜ), the first detection voltage (Vᵢₙᵥ) and the positive peak level of the second detection voltage (V_{S}) increase. The sink enable signal (V_{FTC_Sink}), the source enable signal (V_{FTC_Source}) and the burst enable signal (BE) are still at the logic "0" level. The comparison voltage (V_{COMP}) decreases since the compensation current (I_{COMP}) becomes non-zero and flows from the comparison capacitor (C_{COMP}) to the transconductance amplifier 33. The pulse signal (V_{GATE}) still transitions from the logic "0" level to the logic "1" level when the first indication signal (V_{S_shot}) indicates that the second detection voltage (V_{S}) decreases below the predetermined threshold reference voltage (V_{ref_Vs}), and transitions from the logic "1" level to the logic "0" level when the ramp voltage (Vᵣₐₘₚ) increases above the comparison voltage (V_{COMP}). Since the voltage regulator system has a slow system response, both of the comparison voltage (V_{COMP}) and the pulse width of the pulse signal (V_{GATE}) decrease slowly. As such, the voltage regulator system cannot stop the increases of the output voltage (Vₒᵤₜ), the first detection voltage (Vᵢₙᵥ) and the positive peak level of the second detection voltage (V_{S}).

As shown in FIGS. 10 and 11, at time point t₃, the first detection voltage (Vᵢₙᵥ) is higher than the predetermined first fast transient reference voltage (V_{FT_ref1}), so the sink enable signal (V_{FTC_Sink}) transitions from the logic "0" level to the logic "1" level.

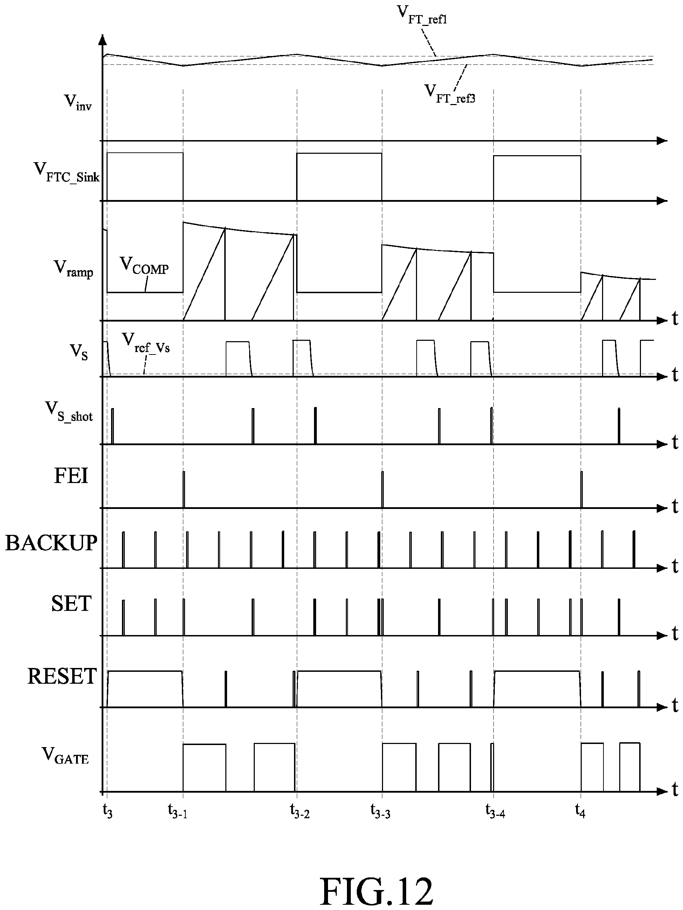

As shown in FIGS. 10 and 12, during a period from time point t₃ to time point t₅, the sink enable signal (V_{FTC_Sink}) transitions from logic "1" level to the logic "0" level when the first detection voltage (Vᵢₙᵥ) is lower than the predetermined third fast transient reference voltage (V_{FTC_Sink})_{_ref3}) (e.g., at time points t₃₋₁, t₃₋₃ and t₄), and transitions from the logic "0" level to the logic "1" level when the first detection voltage (Vᵢₙᵥ) is higher than the predetermined first fast transient reference voltage (V_{FTC_Sink})_{_ref1}) (e.g., at time points t₃₋₂ and t₃₋₄). The source enable signal (V_{FTC_Source}) and the burst enable signal (BE) are still at the logic "0" level. The comparison voltage (V_{COMP}) still decreases since the transconductance amplifier 33 still sinks the non-zero compensation current (I_{COMP}) from the comparison capacitor (C_{COMP}). The comparison voltage (V_{COMP}) drops abruptly when the sink enable signal (V_{FTC_Sink}) transitions from logic "0" level to the logic "1" level, since the current generator 32 starts to sink current from the comparison capacitor (C_{COMP}) at this time. The comparison voltage (V_{COMP}) rises abruptly when the sink enable signal (V_{FTC_Sink}) transitions from logic "1" level to the logic "0" level, since the current generator 32 stops sinking current from the comparison capacitor (C_{COMP}) at this time. When the sink enable signal (V_{FTC_Sink}) is at the logic "1" level, the pulse signal (V_{GATE}) is constantly at the logic "0" level, so the first detection voltage (Vᵢₙᵥ) decreases, and the second detection voltage (V_{S}) is constantly zero. When the sink enable signal (V_{FTC_Sink}) is at the logic "0" level, the pulse signal (V_{GATE}) transitions from the logic "0" level to the logic "1" level upon the second indication signal (FEI) indicating the falling edge of the sink enable signal (V_{FTC_Sink}) or upon the first indication signal (V_{S_shot}) indicating that the second detection voltage (V_{S}) decreases below the predetermined threshold reference voltage (V_{ref_Vs}), and transitions from the logic "1" level to the logic "0" level upon the ramp voltage (Vᵣₐₘₚ) increasing above the comparison voltage (V_{COMP}), such that the first detection voltage (Vᵢₙᵥ) increases, and the second detection voltage (V_{S}) transitions between the positive peak level and the negative peak level.

As shown in FIGS. 10 and 12, at time point t₄, the sink enable signal (V_{FTC_Sink}) transitions from the logic "1" level to the logic "0" level, and the comparison voltage (V_{COMP}) abruptly rises to a level that is lower than the predetermined first burst reference voltage (V_{Burst_ref1}). Therefore, at time point t₅ that lags time point t₄ by the predetermined burst time delay, the burst enable signal (BE) transitions from the logic "0" level to the logic "1" level.

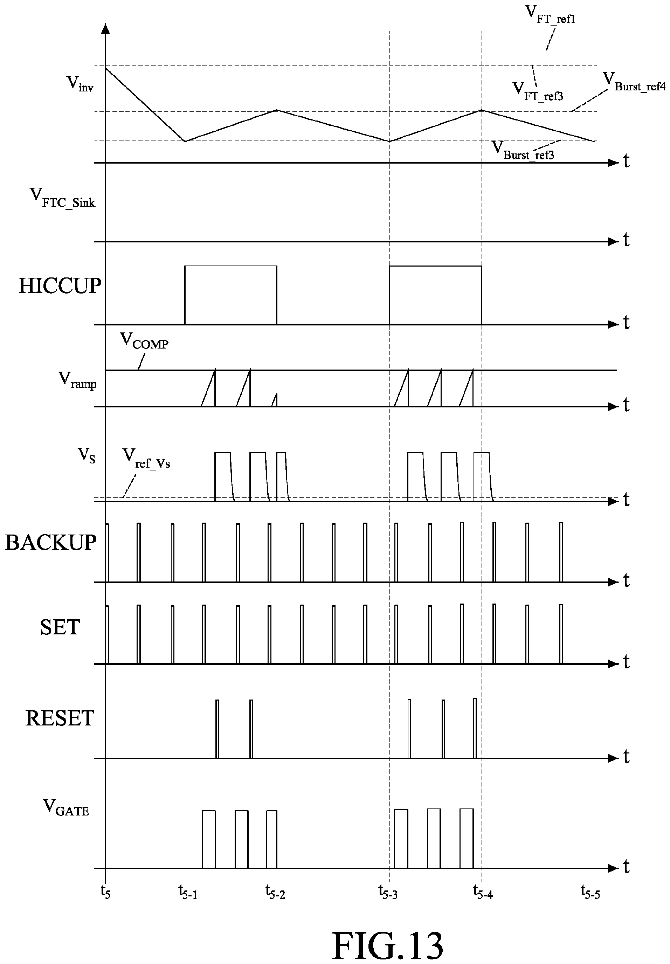

As shown in FIGS. 10 and 13, during a period from time point t₅ to time point t₇, the sink enable signal (V_{FTC_Sink}) is at the logic "0" level. The source enable signal (V_{FTC_Source}) is still at the logic "0" level. The burst enable signal (BE) is at the logic "1" level. The comparison voltage (V_{COMP}) is constant and is lower than the predetermined first burst reference voltage (V_{Burst_ref1}) since the comparison capacitor (C_{COMP}) is neither charged nor discharged. The hiccup signal (HICCUP) transitions from the logic "0" level to the logic "1" level when the first detection voltage (Vᵢₙᵥ) decreases below the predetermined third burst reference voltage (V_{Burst_ref3}) (e.g., at time points t₅₋₁, t₅₋₃, t₅₋₅), and transitions from the logic "1" level to the logic "0" level when the first detection voltage (Vᵢₙᵥ) increases above the predetermined fourth burst reference voltage (V_{Burst_ref4}) (e.g., at time points t₅₋₂, t₅₋₄). When the hiccup signal (HICCUP) is at the logic "0" level, the pulse signal (V_{GATE}) is constantly at the logic "0" level, so the first detection voltage (Vᵢₙᵥ) decreases, and the second detection voltage (V_{S}) is constantly zero. When the hiccup signal (HICCUP) is at the logic "1" level, the pulse signal (V_{GATE}) transitions from the logic "0" level to the logic "1" level at the rising edge of the backup signal (BACKUP), and transitions from the logic "1" state to the logic "0" state upon the ramp voltage (Vᵣₐₘₚ) increasing above the comparison voltage (V_{COMP}), so the first detection voltage (Vᵢₙᵥ) increases, and the second detection voltage (V_{S}) transitions between the positive peak level and the negative peak level.

As shown in FIG. 10, during a period from time point t₃ to time point t₆, the output voltage (Vₒᵤₜ) changes slightly, so the positive peak level of the second detection voltage (V_{S}) changes slightly. During a period from time point t₆ to time point t₇, the output voltage (Vₒᵤₜ) decreases apparently because of the change from light loading to heavy loading at time point t₆, so the positive peak level of the second detection voltage (V_{S}) decreases apparently.

As shown in FIG. 10, at time point t₇, the falling edge of the pulse signal (V_{GATE}) is detected, and the second detection voltage (V_{S}) that is at the positive peak level is lower than the predetermined second burst reference voltage (V_{BURST_ref2}), so the burst enable signal (BE) transitions from the logic "1" level to the logic "0" level.

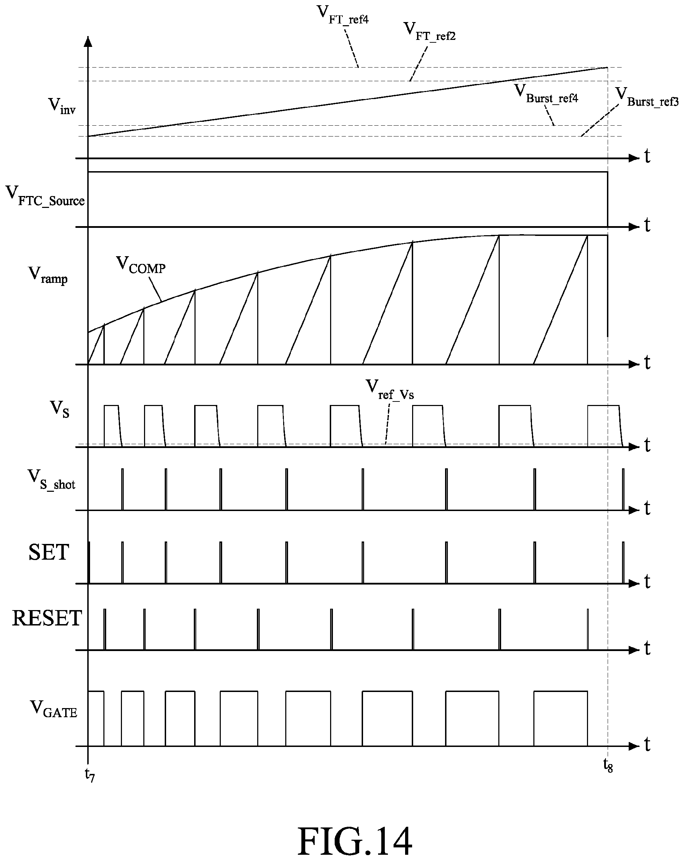

As shown in FIGS. 10 and 14, during a period from time point t₇ to time point t₈, the burst enable signal (BE) is at the logic "0" level. The sink enable signal (V_{FTC_Sink}) is still at the logic "0" level. The source enable signal (V_{FTC_Sink}) is at the logic "1" level since the first detection voltage (Vᵢₙᵥ) is lower than the predetermined second fast transient reference voltage (V_{FT_ref2}). The comparison voltage (V_{COMP}) increases since both of the current generator 32 and the transconductance amplifier 33 source current to the comparison capacitor (C_{COMP}). The pulse signal (V_{GATE}) transitions from the logic "0" level to the logic "1" level when the second indication signal (FEI) indicates the falling edge of the burst enable signal (BE) or when the first indication signal (V_{S_shot}) indicates that the second detection voltage (V_{S}) decreases below the predetermined threshold reference voltage (V_{ref_Vs}). The pulse signal (V_{GATE}) transitions from the logic "1" level to the logic "0" level when the ramp voltage (Vᵣₐₘₚ) increases above the comparison voltage (V_{COMP}). The second detection voltage (V_{S}) transitions between the positive peak level and the negative peak level. The pulse width of the pulse signal (V_{GATE}) increases, so the output voltage (Vₒᵤₜ), the first detection voltage (Vᵢₙᵥ) and the positive peak level of the second detection voltage (V_{S}) increase.

As shown in FIGS. 10 and 14, at time point t₈, the first detection voltage (Vᵢₙᵥ) increases above the predetermined fourth fast transient reference voltage (V_{FT_ref4}), so the source enable signal (V_{FTC_Sink}) transitions from the logic "1" level to the logic "0" level.

As shown in FIG. 10, after time point t₈, the comparison voltage (V_{COMP}) gradually decreases to a constant level since the current generator 32 no longer sources current to the comparison capacitor (C_{COMP}), and since the compensation current (I_{COMP}) that is sourced to the comparison capacitor (C_{COMP}) by the transconductance amplifier 33 gradually decreases to zero. The voltage regulator system enters the steady state again when the comparison voltage (V_{COMP}) becomes constant.

In view of the above, the voltage regulator system of this embodiment has the following advantages.
1. Since the current generator 32 sinks current from the comparison capacitor (C_{COMP}) in response to the change from heavy loading to light loading (e.g., during the period from time point t₂ to time point t₅ as shown in FIG. 10), and since the current generator 32 sources current to the comparison capacitor (C_{COMP}) in response to the change from light loading to heavy loading (e.g., during the period from time point t₆ to time point t₈ as shown in FIG. 10), the output voltage (Vₒᵤₜ) can be relatively stable.
2. When the voltage regulator system has light loading, since the burst mode circuit 50 and the hiccup circuit 31 cooperatively cause the pulse signal (V_{GATE}) to be intermittently at the logic "0" level (e.g., during a period from time point t₅ to time point t₅₋₁, a period from time point t₅₋₂ to time point t₅₋₃ and a period from time point t₅₋₄ to time point t₅₋₅ as shown in FIG. 10), the output voltage (Vₒᵤₜ) will not be overly high.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A voltage regulator system comprising
a power converter (19) adapted to be coupled to a power source (7) and a load (8), for receiving an input voltage (Vᵢₙ) from the power source (7), for further receiving a pulse signal (V_{GATE}), converting the input voltage (Vᵢₙ) into an output voltage (Vₒᵤₜ) for receipt by the load (8) based on the pulse signal (V_{GATE}), and generating a first detection voltage (Vᵢₙᵥ) related to the output voltage (Vₒᵤₜ), power transferred from the power source (7) to the load (8) through said power converter (19) being related to a pulse width of the pulse signal (V_{GATE}); and
a control device (20) including
a comparison capacitor (C_{COMP}) providing a comparison voltage (V_{COMP}),
a current generator (32) coupled to said power converter (19) for receiving the first detection voltage (Vᵢₙᵥ) therefrom, further coupled to said comparison capacitor (C_{COMP}), and operable to sink current from said comparison capacitor (C_{COMP}) or to source current to said comparison capacitor (C_{COMP}) based on the first detection voltage (Vᵢₙᵥ), said current generator (32) starting to sink current from said comparison capacitor (C_{COMP}) so as to discharge said comparison capacitor (C_{COMP}) when determining that the first detection voltage (Vᵢₙᵥ) is higher than a predetermined first fast transient reference voltage (V_{FT_ref1}), said current generator (32) starting to source current to said comparison capacitor (C_{COMP}) so as to charge said comparison capacitor (C_{COMP}) when determining that the first detection voltage (Vᵢₙᵥ) is lower than a predetermined second fast transient reference voltage (V_{FT_ref2}), the predetermined second fast transient reference voltage (V_{FT_ref2}) being lower than the first fast transient reference voltage (V_{FT_ref1}) said current generator (32) further generating a sink enable signal (V_{FTC_Sink}) based on the first detection voltage (Vᵢₙᵥ), the current sinking performed by said current generator (32) being related to the sink enable signal (V_{FTC_Sink}),
a falling edge detection circuit (52) for receiving a burst enable signal (BE), coupled to said current generator (32) for receiving the sink enable signal (V_{FTC_Sink}) therefrom, and detecting respective falling edges of the burst enable signal (BE) and the sink enable signal (V_{FTC_Sink}) to generate a second indication signal (FEI), and
a pulse signal generator (40) coupled to said comparison capacitor (C_{COMP}) for receiving the comparison voltage (V_{COMP}) therefrom, further coupled to said falling edge detection circuit (52) for receiving the second indication signal (FEI) therefrom, further coupled to said power converter (19), and generating the pulse signal (V_{GATE}) for receipt by said power converter (19) based on the comparison voltage (V_{COMP}) and the second indication signal (FEI) in such a way that the pulse width of the pulse signal (V_{GATE}) is related to the comparison voltage (V_{COMP}) and that a pulse start point of the pulse signal (V_{GATE}) is related to the falling edge of any one of the burst enable signal (BE) and the sink enable signal (V_{FTC_Sink}).

2. The voltage regulator system of claim 1, **characterized in that**:
said power converter (19) further generates a second detection voltage (V_{S}) related to transition of the pulse signal (V_{GATE});
said control device (20) further includes a pulse trigger circuit (51) that is coupled to said power converter (19) for receiving the second detection voltage (V_{S}) therefrom, and that generates a first indication signal (V_{S_shot}) based on a comparison between the second detection voltage (V_{S}) and a predetermined threshold reference voltage (V_{ref_Vs});
said pulse signal generator (40) is further coupled to said pulse trigger circuit (51) for receiving the first indication signal (V_{S_shot}) therefrom, and generates the pulse signal (V_{GATE}) further based on the first indication signal (V_{S_shot}) in such a way that the pulse start point of the pulse signal (V_{GATE}) is further related to the first indication signal (V_{S_shot}).

3. The voltage regulator system of claim 2, **characterized in that** said pulse trigger circuit (51) includes:
a comparator (511) having a non-inverting input terminal that is for receiving the predetermined threshold reference voltage (V_{ref_Vs}), an inverting input terminal that is coupled to said power converter (19) for receiving the second detection voltage (V_{S}) therefrom, and an output terminal;
a delay element (512) having an input terminal that is coupled to said output terminal of said comparator (511), and an output terminal;
an inverter (513) having an input terminal that is coupled to said output terminal of said delay element (512), and an output terminal; and
an AND gate (514) having a first input terminal that is coupled to said output terminal of said inverter (513), a second input terminal that is coupled to said output terminal of said comparator (511), and an output terminal that is coupled to said pulse signal generator (40) and that provides the first indication signal (V_{S_shot}).

4. The voltage regulator system of any of claims 1 to 3, **characterized in that**:
said power converter (19) further generates a second detection voltage (V_{S}) related to the output voltage (Vₒᵤₜ);
said control device (20) further includes a burst mode circuit (50);
said burst mode circuit (50) is coupled to said comparison capacitor (V_{COMP}), said power converter (19) and said pulse signal generator (40) for receiving the comparison voltage (V_{COMP}), the second detection voltage (V_{S}) and the pulse signal (V_{GATE}) respectively therefrom;
said burst mode circuit (50) generates the burst enable signal (BE) and a burst disable signal (BD) based on a comparison between the comparison voltage (V_{COMP}) and a predetermined first burst reference voltage (V_{Burst_ref1}) when said power converter (19) does not sink current from said comparison capacitor (C_{COMP}), and based on a comparison between the second detection voltage (V_{S}) and a predetermined second burst reference voltage (V_{Burst_ref2}) when detecting a falling edge of the pulse signal (V_{GATE});
the burst enable signal (BE) and the burst disable signal (BD) are complementary to each other; and
said pulse signal generator (40) is for further receiving the burst enable signal (BE) from said burst mode circuit (50), and generates the pulse signal (V_{GATE}) further based on the burst enable signal (BE).

5. The voltage regulator system of claim 4, **characterized in that**:
said burst mode circuit (50) includes
a first comparator (331) having a non-inverting input terminal that is for receiving the predetermined first burst reference voltage (V_{Burst_ref1}), an inverting input terminal that is coupled to said comparison capacitor (V_{COMP}) for receiving the comparison voltage (V_{COMP}) therefrom, and an output terminal;
an inverter (337) having an input terminal that is coupled to said current generator (32) for receiving the sink enable signal (V_{FTC_Sink}) therefrom, and an output terminal;
a first AND gate (338) having a first input terminal that is coupled to said output terminal of said first comparator (331), a second input terminal that is coupled to said output terminal of said inverter (337), and an output terminal;
a delay element (332) having an input terminal that is coupled to said output terminal of said first AND gate (338), and an output terminal;
a second comparator (334) having a non-inverting input terminal that is for receiving the predetermined second burst reference voltage (V_{Burst_ref2}), an inverting input terminal that is coupled to said power converter (19) for receiving the second detection voltage (V_{S}) therefrom, and an output terminal;
a falling edge detector (335) having an input terminal that is coupled to said pulse signal generator (40) for receiving the pulse signal (V_{GATE}) therefrom, and an output terminal;
a second AND gate (336) having a first input terminal that is coupled to said output terminal of said second comparator (334), a second input terminal that is coupled to said output terminal of said falling edge detector (335), and an output terminal; and
an RS flip-flop (333) having a set terminal that is coupled to said output terminal of said delay element (332), a reset terminal that is coupled to said output terminal of said second AND gate (336), a non-inverting output terminal that is coupled to said pulse signal generator (40) and that provides the burst enable signal (BE), and an inverting output terminal that provides the burst disable signal (BD).

6. The voltage regulator system of any of claims 1 to 5, **characterized in that**:
said control device (20) further includes a hiccup circuit (31) that is coupled to said power converter (19) for receiving the first detection voltage (Vᵢₙᵥ) therefrom, and that generates a hiccup signal (HICCUP) based on a comparison between the first detection voltage (Vᵢₙᵥ) and a predetermined third burst reference voltage (V_{Burst_ref3}), and based on a comparison between the first detection voltage (Vᵢₙᵥ) and a predetermined fourth burst reference voltage (V_{Burst_ref4}), the predetermined fourth burst reference voltage (V_{Burst_ref4}) being higher than the predetermined third burst reference voltage (V_{Burst_ref3}) ; and
said pulse signal generator (40) is further coupled to said hiccup circuit (31) for receiving the hiccup signal (HICCUP) therefrom, and generates the pulse signal (V_{GATE}) further based on the hiccup signal (HICCUP).

7. The voltage regulator system of claim 6, **characterized in that** said hiccup circuit (31) includes:
a first comparator (301) having a non-inverting input terminal that is for receiving the predetermined third burst reference voltage (V_{Burst_ref3}), an inverting input terminal that is coupled to said power converter (19) for receiving the first detection voltage (Vᵢₙᵥ) therefrom, and an output terminal;
a second comparator (302) having a non-inverting input terminal that is coupled to said power converter (19) for receiving the first detection signal (Vᵢₙᵥ) therefrom, an inverting input terminal that is for receiving the predetermined fourth burst reference voltage (V_{Burst_ref4}), and an output terminal; and
an RS flip-flop (303) having a set terminal that is coupled to said output terminal of said first comparator (301), a reset terminal that is coupled to said output terminal of said second comparator (302), and an output terminal that is coupled to said pulse signal generator (40) and that provides the hiccup signal (HICCUP).

8. The voltage regulator system of claim 1, **characterized in that** said falling edge detection circuit (52) includes:
an OR gate (521) having a first input terminal that is for receiving the burst enable signal (BE), a second input terminal that is coupled to said current generator (32) for receiving the sink enable signal (V_{FTC_Sink}) therefrom, and an output terminal;
an inverter (522) having an input terminal that is coupled to said output terminal of said OR gate (521), and an output terminal;
a delay element (523) having an input terminal that is coupled to said output terminal of said OR gate (521), and an output terminal; and
an AND gate (524) having a first input terminal that is coupled to said output terminal of said inverter (522), a second input terminal that is coupled to said output terminal of said delay element (523), and an output terminal that is coupled to said pulse signal generator (40) and that provides the second indication signal (FEI).

9. The voltage regulator system of any of claims 1 to 8, **characterized in that** said current generator (32) includes:
a first comparator (311) having a non-inverting input terminal that is coupled to said power converter (19) for receiving the first detection voltage (Vᵢₙᵥ) therefrom, an inverting input terminal that is for receiving the predetermined first fast transient reference voltage (V_{FT_ref1}), and an output terminal;
a second comparator (312) having a non-inverting input terminal that is for receiving a predetermined third fast transient reference voltage (V_{FT_ref3}), an inverting input terminal that is coupled to said power converter (19) for receiving the first detection voltage (Vᵢₙᵥ) therefrom, and an output terminal, the predetermined third fast transient reference voltage (V_{FT_ref3}) being lower than the predetermined first fast transient reference voltage (V_{FT_ref1});
a third comparator (313) having a non-inverting input terminal that is for receiving the predetermined second fast transient reference voltage (V_{FT_ref2}), an inverting input terminal that is coupled to said power converter (19) for receiving the first detection voltage (Vᵢₙᵥ) therefrom, and an output terminal;
a fourth comparator (314) having a non-inverting input terminal that is coupled to said power converter (19) for receiving the first detection voltage (Vᵢₙᵥ) therefrom, an inverting input terminal that is for receiving a predetermined fourth fast transient reference voltage (V_{FT_ref4}), and an output terminal, the predetermined fourth fast transient reference voltage (V_{FT_ref4}) being lower than the predetermined third fast transient reference voltage (V_{FT_ref3}), and being higher than the predetermined second fast transient reference voltage (V_{FT_ref2});
a first RS flip-flop (315) having a set terminal that is coupled to said output terminal of said first comparator (311), a reset terminal that is coupled to said output terminal of said second comparator (312), and an output terminal;
a second RS flip-flop (316) having a set terminal that is coupled to said output terminal of said third comparator (313), a reset terminal that is coupled to said output terminal of said fourth comparator (314), and an output terminal;
a first AND gate (322) having a first input terminal that is coupled to said output terminal of said first RS flip-flop (315), a second input terminal that is for receiving a burst disable signal (BD), and an output terminal;
a second AND gate (323) having a first input terminal that is coupled to said output terminal of said second RS flip-flop (316), a second input terminal that is for receiving the burst disable signal (BD), and an output terminal;
a first switch (319) having a first terminal that is coupled to said comparison capacitor (C_{COMP}), a second terminal, and a control terminal that is coupled to said output terminal of said first AND gate (322);
a second switch (320) having a first terminal, a second terminal that is coupled to said comparison capacitor (C_{COMP}), and a control terminal that is coupled to said output terminal of said second AND gate (323);
a first current source (317) coupled to said second terminal of said first switch (319), and providing a discharge current (I_{discharge}) that flows through said first switch (319) from said first terminal thereof to said second terminal thereof when said first switch (319) conducts; and
a second current source (318) coupled to said first terminal of said second switch (320), and providing a charge current (I_{charge}) that flows through said second switch (320) from said first terminal thereof to said second terminal thereof when said second switch (320) conducts.

10. The voltage regulator system of any of claims 1 to 9, **characterized in that** said pulse signal generator (40) includes:
a ramp generator (41) for receiving the pulse signal (V_{GATE}), and generating a ramp voltage (Vᵣₐₘₚ) that increases within each pulse of the pulse signal (V_{GATE});
a comparator (42) coupled to said ramp generator (41) and said comparison capacitor (C_{COMP}) for receiving the ramp voltage (Vᵣₐₘₚ) and the comparison voltage (V_{COMP}) respectively therefrom, and comparing the ramp voltage (Vᵣₐₘₚ) and the comparison voltage (V_{COMP}) to generate a comparison signal; and
a control circuit (43) coupled to said comparator (42) for receiving the comparison signal therefrom, further coupled to said power converter (19), and generates the pulse signal (V_{GATE}) for receipt by said power converter (19) based on the comparison signal in such a way that the pulse width of the pulse signal (V_{GATE}) is related to the comparison signal.

11. The voltage regulator system of any of claims 1 to 10, **characterized in that** said power converter (19) includes:
a first rectifying-and-filtering circuit (190) adapted to be coupled to the power source (7) for receiving the input voltage (Vᵢₙ) therefrom, and rectifying and filtering the input voltage (Vᵢₙ) to generate a rectified voltage (V_{BR});
a transformer (191) including a primary winding (Nₚ) that is coupled to said first rectifying-and-filtering circuit (190) for receiving the rectified voltage (V_{BR}) therefrom, a secondary winding (Nₛ), and an auxiliary winding (Nₐ) that provides an auxiliary voltage (V_{AUX});
a switch (Q) coupled to said primary winding (Nₚ), further coupled to said pulse signal generator (40) for receiving the pulse signal (V_{GATE}) therefrom, and conducting within each pulse of the pulse signal (V_{GATE}) ;
a second rectifying-and-filtering circuit (193) coupled to said secondary winding (Nₛ), adapted to be further coupled to the load (8), and rectifying and filtering a voltage across said secondary winding (Nₛ) to generate the output voltage (Vₒᵤₜ) for receipt by the load (8); and
a voltage detection circuit (192) coupled to said auxiliary winding (Nₐ) for receiving the auxiliary voltage (V_{AUX}) therefrom, and generating the first detection voltage (Vᵢₙᵥ) based on the auxiliary voltage (V_{AUX}).

## Patentansprüche

1. Ein Spannungsreglersystem folgendes aufweisend
einen Leistungswandler (19), der mit einer Energiequelle (7) und einer Last (8) verbunden ist, wobei der Leistungswandler (19) eine Eingangsspannung (Vᵢₙ) von der Energiequelle (7) sowie ein Impulssignal (V_{GATE}) empfängt und auf der Grundlage des Impulssignals (V_{GATE}) die Eingangsspannung (Vᵢₙ) in eine Ausgangsspannung (Vₒᵤₜ) zum Empfang durch die Last (8) umwandelt und eine erste Erfassungsspannung (Vᵢₙᵥ) erzeugt, die mit der Ausgangsspannung (Vₒᵤₜ) in Beziehung steht, wobei die von der Energiequelle (7) durch den Leistungswandler (19) an die Last (8) übertragene Leistung mit einer Impulsbreite des Impulssignals (V_{GATE}) in Beziehung steht; und
eine Steuervorrichtung (20), die folgendes aufweist,
einen Vergleichskondensator (C_{COMP}), der eine Vergleichsspannung (V_{COMP}) liefert,
einen Stromgenerator (32), der mit dem Leistungswandler (19) gekoppelt ist, um von diesem die erste Erfassungsspannung (Vᵢₙᵥ) zu empfangen, der ferner mit dem Vergleichskondensator (C_{COMP}) gekoppelt ist und der so betreibbar ist, dass er auf der Grundlage der ersten Erfassungsspannung (Vᵢₙᵥ) Strom von dem Vergleichskondensator (C_{COMP}) abnimmt oder dem Vergleichskondensator (C_{COMP}) Strom zuführt, wobei der Stromgenerator (32) beginnt, Strom von dem Vergleichskondensator (C_{COMP}) abzuführen, um den Vergleichskondensator (C_{COMP}) zu entladen, wenn festgestellt wird, dass die erste Erfassungsspannung (Vᵢₙᵥ) höher ist als eine vorbestimmte erste schnelle Übergangs-Referenzspannung (V_{FT_ref1}), wobei der Stromgenerator (32) beginnt, Strom an den Vergleichskondensator (C_{COMP}) zuführt, um den Vergleichskondensator (C_{COMP}) zu laden, wenn festgestellt wird, dass die erste Erfassungsspannung (Vᵢₙᵥ) niedriger als eine vorbestimmte zweite schnelle Übergangs-Referenzspannung (V_{FT_ref2}) ist, wobei die vorbestimmte zweite schnelle Übergangs-Referenzspannung (V_{FT_ref2}) niedriger ist als die erste schnelle Übergangs-Referenzspannung (V_{FT_ref1}), wobei der Stromgenerator (32) ferner ein Abführungsfreigabesignal (V_{FTC_Sink}) auf der Grundlage der ersten Erfassungsspannung (Vᵢₙᵥ) erzeugt, wobei die von dem Stromgenerator (32) durchgeführte Stromabführung mit dem Abführungsfreigabesignal (V_{FTC_Sink}) in Beziehung steht,
eine Schaltung (52) zur Erkennung fallender Flanken zum Empfang eines Burst-Freigabesignals (BE), die mit dem Stromgenerator (32) verbunden ist, um von diesem das Abführungsfreigabesignal (V_{FTC_Sink}) zu empfangen, und die jeweilige fallende Flanken des Burst-Freigabesignals (BE) und des Abführungsfreigabesignals (V_{FTC_Sink}) erkennt, um ein zweites Anzeigesignal (FEI) zu erzeugen, und
einen Impulssignalgenerator (40), der mit dem Vergleichskondensator (C_{COMP}) verbunden ist, um von diesem die Vergleichsspannung (V_{COMP}) zu empfangen, der ferner mit der Schaltung (52) zur Erfassung der fallenden Flanke verbunden ist, um von dieser das zweite Anzeigesignal (FEI) zu empfangen, und der ferner mit dem Leistungswandler (19) verbunden ist, so dass der Leistungswandler (19) das von dem Impulsgenerator (40) erzeugte Impulssignals (V_{GATE}) empfängt, wobei der Impulsgenerator (40) das Impulssignals (V_{GATE}) auf der Grundlage der Vergleichsspannung (V_{COMP}) und des zweiten Anzeigesignals (FEI) derart erzeugte, dass die Impulsbreite des Impulssignals (V_{GATE}) mit der Vergleichsspannung (V_{COMP}) in Beziehung steht und dass ein Impulsstartpunkt des Impulssignals (V_{GATE}) mit der abfallenden Flanke des Burst-Freigabesignals (BE) oder des Abführungsfreigabesignals (VFTC_Sink) in Beziehung steht.

2. Das Spannungsreglersystem nach Anspruch 1, **dadurch gekennzeichnet, dass**:
der Leistungswandler (19) außerdem eine zweite Erfassungsspannung (Vₛ) erzeugt, die mit dem Übergang des Impulssignals (V_{GATE}) in Beziehung steht;
die Steuervorrichtung (20) ferner eine Impulstriggerschaltung (51) aufweist, die mit dem Leistungswandler (19) verbunden ist, um die zweite Erfassungsspannung (VS) von diesem zu empfangen, und die ein erstes Anzeigesignal (V_{S_shot}) auf der Grundlage eines Vergleichs zwischen der zweiten Erfassungsspannung (Vₛ) und einer vorbestimmten Schwellenreferenzspannung (V_{ref_Vs}) erzeugt;
der Impulssignalgenerator (40) ferner mit der Impulstriggerschaltung (51) verbunden ist, um das erste Anzeigesignal (V_{S_shot}) von dieser zu empfangen, und das Impulssignal (V_{GATE}) ferner auf der Grundlage des ersten Anzeigesignals (V_{S_shot}) in der Weise erzeugt, dass der Impulsstartpunkt des Impulssignals (V_{GATE}) ferner in Beziehung zu dem ersten Anzeigesignal (V_{S_shot}) steht.

3. Das Spannungsreglersystem nach Anspruch 2, **dadurch gekennzeichnet, dass** die Impulstriggerschaltung (51) aufweist:
einen Komparator (511) mit einem nicht-invertierenden Eingangsanschluss, der zum Empfangen der vorbestimmten Schwellenreferenzspannung (V_{ref_Vs}) dient, mit einem invertierenden Eingangsanschluss, der mit dem Leistungswandler (19) verbunden ist, um die zweite Erfassungsspannung (Vₛ) von diesem zu empfangen, und mit einem Ausgangsanschluss;
ein Verzögerungsglied (512) mit einem Eingangsanschluss, der mit dem Ausgangsanschluss des Komparators (511) verbunden ist, und einem Ausgangsanschluss;
einen Inverter (513) mit einem Eingangsanschluss, der mit dem Ausgangsanschluss des Verzögerungsglieds (512) verbunden ist, und einem Ausgangsanschluss; und
ein UND-Gatter (514) mit einem ersten Eingangsanschluss, der mit dem Ausgangsanschluss des Inverters (513) verbunden ist, mit einem zweiten Eingangsanschluss, der mit dem Ausgangsanschluss des Komparators (511) verbunden ist, und mit einem Ausgangsanschluss, der mit dem Impulssignalgenerator (40) verbunden ist und der das erste Anzeigesignal (V_{S_shot}) bereitstellt.

4. Das Spannungsreglersystem nach einem der Ansprüche 1 bis 3, **dadurch gekennzeichnet, dass**:
der Leistungswandler (19) außerdem eine zweite Erfassungsspannung (Vₛ) in Beziehung zur Ausgangsspannung (Vₒᵤₜ) erzeugt;
die Steuervorrichtung (20) außerdem eine Burst-Modus-Schaltung (50) aufweist;
die Burst-Mode-Schaltung (50) mit dem Vergleichskondensator (V_{COMP}), dem Leistungswandler (19) und dem Impulssignalgenerator (40) verbunden ist, um die Vergleichsspannung (V_{COMP}), die zweite Detektionsspannung (Vₛ) bzw. das Impulssignal (V_{GATE}) von diesen zu empfangen;
die Burst-Modus-Schaltung (50) das Burst-Freigabesignal (BE) und ein Burst-Sperrsignal (BD) auf der Grundlage eines Vergleichs zwischen der Vergleichsspannung (V_{COMP}) und einer vorbestimmten ersten Burst-Referenzspannung (V_{Burst_ref1}) erzeugt, wenn der Leistungswandler (19) keinen Strom von dem Vergleichskondensator (C_{COMP}) abführt, und das Burst-Freigabesignal (BE) und das Burst-Sperrsignal (BD) auf der Grundlage eines Vergleichs zwischen der zweiten Erfassungsspannung (Vₛ) und einer vorbestimmten zweiten Burst-Referenzspannung (V_{Burst_ref2}) erzeugt, wenn eine fallende Flanke des Impulssignals (V_{GATE}) erfasst wird;
das Burst-Freigabesignal (BE) und das Burst-Sperrsignal (BD) komplementär zueinander sind; und
der Impulssignalgenerator (40) das Burst-Freigabesignal (BE) von der Burst-Modus-Schaltung (50) empfängt und das Impulssignal (V_{GATE}) auf der Grundlage des Burst-Freigabesignals (BE) erzeugt.

5. Das Spannungsreglersystem nach Anspruch 4, **dadurch gekennzeichnet, dass**:
die Burst-Mode-Schaltung (50) folgendes aufweist
einen ersten Komparator (331) mit einem nicht-invertierenden Eingangsanschluss, der zum Empfangen der vorbestimmten ersten Burst-Referenzspannung (V_{Burst_ref1}) dient, mit einem invertierenden Eingangsanschluss, der mit dem Vergleichskondensator (V_{COMP}) verbunden ist, um die Vergleichsspannung (V_{COMP}) von diesem zu empfangen, und mit einem Ausgangsanschluss;
einen Inverter (337) mit einem Eingangsanschluss, der mit dem Stromgenerator (32) verbunden ist, um das Abführungsfreigabesignal (V_{FTC_Sink}) von diesem zu empfangen, und mit einem Ausgangsanschluss;
ein erstes UND-Gatter (338) mit einem ersten Eingangsanschluss, der mit dem Ausgangsanschluss des ersten Komparators (331) verbunden ist, mit einem zweiten Eingangsanschluss, der mit dem Ausgangsanschluss des Inverters (337) verbunden ist, und mit einem Ausgangsanschluss;
ein Verzögerungsglied (332) mit einem Eingangsanschluss, der mit dem Ausgangsanschluss des ersten UND-Gatters (338) verbunden ist, und mit einem Ausgangsanschluss;
einen zweiten Komparator (334) mit einem nicht-invertierenden Eingangsanschluss, der zum Empfangen der vorbestimmten zweiten Burst-Referenzspannung (V_{Burst_ref2}) dient, mit einem invertierenden Eingangsanschluss, der mit dem Leistungswandler (19) verbunden ist, um die zweite Erfassungsspannung (Vₛ) von diesem zu empfangen, und mit einem Ausgangsanschluss;
einen Detektor für fallende Flanken (335) mit einem Eingangsanschluss, der mit dem Impulssignalgenerator (40) verbunden ist, um das Impulssignal (V_{GATE}) von diesem zu empfangen, und mit einem Ausgangsanschluss;
ein zweites UND-Gatter (336) mit einem ersten Eingangsanschluss, der mit dem Ausgangsanschluss des zweiten Komparators (334) verbunden ist, mit einem zweiten Eingangsanschluss, der mit dem Ausgangsanschluss des Detektors für fallende Flanken (335) verbunden ist, und mit einem Ausgangsanschluss; und
ein RS-Flip-Flop (333) mit einem Set-Anschluss, der mit dem Ausgangsanschluss des Verzögerungsglieds (332) verbunden ist, mit einem Reset-Anschluss, der mit dem Ausgangsanschluss des zweiten UND-Gatters (336) verbunden ist, mimt einem nicht-invertierenden Ausgangsanschluss, der mit dem Impulssignalgenerator (40) verbunden ist und das Burst-Freigabesignal (BE) bereitstellt, und einem invertierenden Ausgangsanschluss, der das Burst-Sperrsignal (BD) bereitstellt.

6. Das Spannungsreglersystem nach einem der Ansprüche 1 bis 5, **dadurch gekennzeichnet, dass**:
die Steuervorrichtung (20) ferner eine Hiccup-Schaltung (31) aufweist, die mit dem Leistungswandler (19) verbunden ist, um die erste Erfassungsspannung (Vᵢₙᵥ) von diesem zu empfangen, und die ein Hiccup-Signal (HICCUP) auf der Grundlage eines Vergleichs zwischen der ersten Erfassungsspannung (Vᵢₙᵥ) und einer vorbestimmten dritten Burst-Referenzspannung (V_{Burst_ref3}) sowie basierend auf einem Vergleich zwischen der ersten Erfassungsspannung (Vᵢₙᵥ) und einer vorbestimmten vierten Burst-Referenzspannung (V_{Burst_ref4}) erzeugt, wobei die vorbestimmte vierte Burst-Referenzspannung (V_{Burst_ref4}) höher ist als die vorbestimmte dritte Burst-Referenzspannung (V_{Burst_ref3}); und
der Impulssignalgenerator (40) ferner mit der Hiccup-Schaltung (31) verbunden ist, um das Hiccup-Signal (HICCUP) von dieser zu empfangen, und das Impulssignal (V_{GATE}) ferner auf der Grundlage des Hiccup-Signals (HICCUP) erzeugt.

7. Das Spannungsreglersystem nach Anspruch 6, **dadurch gekennzeichnet, dass** die Hiccup-Schaltung (31) aufweist:
einen ersten Komparator (301) mit einem nicht-invertierenden Eingangsanschluss, der zum Empfangen der vorbestimmten dritten Burst-Referenzspannung (V_{Burst_ref3}) dient, mit einem invertierenden Eingangsanschluss, der mit dem Leistungswandler (19) verbunden ist, um die erste Erfassungsspannung (Vᵢₙᵥ) von diesem zu empfangen, und mit einem Ausgangsanschluss;
einen zweiten Komparator (302) mit einem nicht-invertierenden Eingangsanschluss, der mit dem Leistungswandler (19) verbunden ist, um von diesem das erste Erfassungssignal (Vᵢₙᵥ) zu empfangen, mit einem invertierenden Eingangsanschluss, der zum Empfang der vorbestimmten vierten Burst-Referenzspannung (V_{Burst_ref4}) dient, und mit einem Ausgangsanschluss; und
ein RS-Flipflop (303) mit einem Set-Anschluss, der mit dem Ausgangsanschluss des ersten Komparators (301) verbunden ist, mit einem Reset-Anschluss, der mit dem Ausgangsanschluss des zweiten Komparators (302) verbunden ist, und mit einem Ausgangsanschluss, der mit dem Impulssignalgenerator (40) verbunden ist und der das Hiccup-Signal (HICCUP) bereitstellt.

8. Das Spannungsreglersystem nach Anspruch 1, **dadurch gekennzeichnet, dass** die Schaltung (52) zur Erfassung der fallenden Flanke aufweist:
ein ODER-Gatter (521) mit einem ersten Eingangsanschluss, der zum Empfangen des Burst-Freigabesignals (BE) dient, mit einem zweiten Eingangsanschluss, der mit dem Stromgenerator (32) verbunden ist, um von diesem das Abführungsfreigabesignal (V_{FTC_Sink}) zu empfangen, und mit einem Ausgangsanschluss;
einen Inverter (522) mit einem Eingangsanschluss, der mit dem Ausgangsanschluss des ODER-Gatters (521) verbunden ist, und mit einem Ausgangsanschluss;
ein Verzögerungsglied (523) mit einem Eingangsanschluss, der mit dem Ausgangsanschluss des ODER-Gatters (521) verbunden ist, und mit einem Ausgangsanschluss; und
ein UND-Gatter (524) mit einem ersten Eingangsanschluss, der mit dem Ausgangsanschluss des Inverters (522) verbunden ist, mit einem zweiten Eingangsanschluss, der mit dem Ausgangsanschluss des Verzögerungsglieds (523) verbunden ist, und mit einem Ausgangsanschluss, der mit dem Impulssignalgenerator (40) verbunden ist und der das zweite Anzeigesignal (FEI) bereitstellt.

9. Das Spannungsreglersystem nach einem der Ansprüche 1 bis 8, **dadurch gekennzeichnet, dass** der Stromgenerator (32) aufweist:
einen ersten Komparator (311) mit einem nicht-invertierenden Eingangsanschluss, der mit dem Leistungswandler (19) verbunden ist, um von diesem die erste Erfassungsspannung (Vᵢₙᵥ) zu empfangen, mit einem invertierenden Eingangsanschluss, der zum Empfang der vorbestimmten ersten schnellen Übergangs-Referenzspannung (V_{FT_ref1}) dient, und einem Ausgangsanschluss;
einen zweiten Komparator (312) mit einem nicht-invertierenden Eingangsanschluss, der zum Empfangen einer vorbestimmten dritten schnelle Übergangs-Referenzspannung (V_{FT_ref3}) dient, mit einem invertierenden Eingangsanschluss, der mit dem Leistungswandler (19) verbunden ist, um die erste Erfassungsspannung (Vᵢₙᵥ) von diesem zu empfangen, und mit einem Ausgangsanschluss, wobei die vorbestimmte dritte schnelle Übergangs-Referenzspannung (V_{FT_ref3}) niedriger ist als die vorbestimmte erste schnelle Übergangs-Referenzspannung (V_{FT_ref1});
einen dritten Komparator (313) mit einem nicht-invertierenden Eingangsanschluss, der zum Empfangen der vorbestimmten zweiten schnellen Übergangs-Referenzspannung (V_{FT_ref2}) dient, mit einem invertierenden Eingangsanschluss, der mit dem Leistungswandler (19) verbunden ist, um die erste Erfassungsspannung (Vᵢₙᵥ) von diesem zu empfangen, und mit einem Ausgangsanschluss;
einen vierten Komparator (314) mit einem nicht-invertierenden Eingangsanschluss, der mit dem Leistungswandler (19) verbunden ist, um die erste Erfassungsspannung (Vᵢₙᵥ) von diesem zu empfangen, mit einem invertierenden Eingangsanschluss, der zum Empfangen einer vorbestimmten vierten schnellen Übergangs-Referenzspannung (V_{FT_ref4}) dient, und mit einem Ausgangsanschluss, wobei die vorbestimmte vierte schnelle Übergangs-Referenzspannung (V_{FT_ref4}) niedriger als die vorbestimmte dritte schnelle Übergangs-Referenzspannung (V_{FT_ref3}) und höher als die vorbestimmte zweite schnelle Übergangs-Referenzspannung (V_{FT_ref2}) ist;
ein erstes RS-Flip-Flop (315) mit einem Set-Anschluss, der mit dem Ausgangsanschluss des ersten Komparators (311) verbunden ist, mit einem Reset-Anschluss, der mit dem Ausgangsanschluss des zweiten Komparators (312) verbunden ist, und mit einem Ausgangsanschluss;
ein zweites RS-Flipflop (316) mit einem Set-Anschluss, der mit dem Ausgangsanschluss des dritten Komparators (313) verbunden ist, mit einem Reset-Anschluss, der mit dem Ausgangsanschluss des vierten Komparators (314) verbunden ist, und einem Ausgangsanschluss;
ein erstes UND-Gatter (322) mit einem ersten Eingangsanschluss, der mit dem Ausgangsanschluss des ersten RS-Flipflops (315) verbunden ist, mit einem zweiten Eingangsanschluss, der zum Empfangen eines Burst-Sperrsignals (BD) dient, und mit einem Ausgangsanschluss;
ein zweites UND-Gatter (323) mit einem ersten Eingangsanschluss, der mit dem Ausgangsanschluss des zweiten RS-Flipflops (316) verbunden ist, mit einem zweiten Eingangsanschluss, der zum Empfangen des Burst-Sperrsignals (BD) dient, und mit einem Ausgangsanschluss;
einen ersten Schalter (319) mit einem ersten Anschluss, der mit dem Vergleichskondensator (C_{COMP}) verbunden ist, mit einem zweiten Anschluss und mit einem Steueranschluss, der mit dem Ausgangsanschluss des ersten UND-Gatters (322) verbunden ist;
einen zweiten Schalter (320) mit einem ersten Anschluss, mit einem zweiten Anschluss, der mit dem Vergleichskondensator (C_{COMP}) verbunden ist, und mit einem Steueranschluss, der mit dem Ausgangsanschluss des zweiten UND-Gatters (323) verbunden ist;
eine erste Stromquelle (317), die mit dem zweiten Anschluss des ersten Schalters (319) verbunden ist und einen Entladestrom (I_{discharge}) bereitstellt, der durch den ersten Schalter (319) von dessen erstem Anschluss zu dessen zweitem Anschluss fließt, wenn der erste Schalter (319) leitet; und
eine zweite Stromquelle (318), die mit dem ersten Anschluss des zweiten Schalters (320) verbunden ist und mit einen Ladestrom (I_{charge}) bereitstellt, der durch den zweiten Schalter (320) von dessen erstem Anschluss zu dessen zweitem Anschluss fließt, wenn der zweite Schalter (320) leitet.

10. Spannungsreglersystem nach einem der Ansprüche 1 bis 9, **dadurch gekennzeichnet, dass** der Impulssignalgenerator (40) aufweist:
einen Rampengenerator (41) zum Empfangen des Impulssignals (V_{GATE}) und zum Erzeugen einer Rampenspannung (Vᵣₐₘₚ), die innerhalb jedes Impulses des Impulssignals (V_{GATE}) ansteigt;
einen Komparator (42), der mit dem Rampengenerator (41) und dem Vergleichskondensator (C_{COMP}) verbunden ist, um die Rampenspannung (Vᵣₐₘₚ) bzw. die Vergleichsspannung (V_{COMP}) von diesen zu empfangen und die Rampenspannung (Vᵣₐₘₚ) und die Vergleichsspannung (V_{COMP}) zu vergleichen, um ein Vergleichssignal zu erzeugen; und
eine Steuerschaltung (43), die mit dem Komparator (42) verbunden ist, um das Vergleichssignal von diesem zu empfangen, und die ferner mit dem Leistungswandler (19) verbunden ist und das Impulssignal (V_{GATE}) zum Empfang durch den Leistungswandler (19) auf der Grundlage des Vergleichssignals in der Weise erzeugt, dass die Impulsbreite des Impulssignals (V_{GATE}) in Beziehung zu dem Vergleichssignal steht.

11. Das Spannungsreglersystem nach einem der Ansprüche 1 bis 10, **dadurch gekennzeichnet, dass** der Leistungswandler (19) aufweist:
eine erste Gleichrichtungs- und Filterschaltung (190), die mit der Stromquelle (7) verbunden ist, um die Eingangsspannung (Vᵢₙ) von dieser zu empfangen und die Eingangsspannung (Vᵢₙ) gleichzurichten und zu filtern, um eine gleichgerichtete Spannung (V_{BR}) zu erzeugen;
einen Transformator (191) mit einer Primärwicklung (Nₚ), die mit der ersten Gleichrichtungs- und Filterschaltung (190) verbunden ist, um von dieser die gleichgerichtete Spannung (V_{BR}) zu empfangen, mit einer Sekundärwicklung (Nₛ) und mit einer Zusatzwicklung (Nₐ) aufweist, die eine Zusatzspannung (V_{AUX}) liefert;
einen Schalter (Q), der mit der Primärwicklung (Nₚ) verbunden ist, ferner mit dem Impulssignalgenerator (40) verbunden ist, um das Impulssignal (V_{GATE}) von diesem zu empfangen und innerhalb jedes Impulses des Impulssignals (V_{GATE}) zu leiten;
eine zweite Gleichrichtungs- und Filterschaltung (193), die mit der Sekundärwicklung (Nₛ) verbunden ist, die zum Verbinden mit der Last (8) ausgebildet ist und die eine Spannung an der Sekundärwicklung (Nₛ) gleichrichtet und filtert, um die Ausgangsspannung (Vₒᵤₜ) zum Empfang durch die Last (8) zu erzeugen; und
eine Spannungserfassungsschaltung (192), die mit der Zusatzwicklung (Nₐ) verbunden ist, um die Zusatzspannung (V_{AUX})von dieser zu empfangen und die erste Erfassungsspannung (Vᵢₙᵥ) auf der Grundlage der Zusatzspannung (V_{AUX})zu erzeugen.

## Revendications

1. Système de régulateur de tension comprenant
un convertisseur de puissance (19) adapté pour être couplé à une source de puissance (7) et à une charge (8), pour recevoir une tension d'entrée (Vᵢₙ) provenant de la source de puissance (7), pour en outre recevoir un signal d'impulsion (V_{GATE}), convertir la tension d'entrée (Vᵢₙ) en une tension de sortie (Vₒᵤₜ) pour une réception par la charge (8) sur la base du signal d'impulsion (V_{GATE}), et générer une première tension de détection (Vᵢₙᵥ) liée à la tension de sortie (Vₒᵤₜ), la puissance transférée de la source de puissance (7) à la charge (8) à travers ledit convertisseur de puissance (19) étant liée à une largeur d'impulsion du signal d'impulsion (V_{GATE}) ; et
un dispositif de commande (20) comportant
un condensateur de comparaison (C_{COMP}) fournissant une tension de comparaison (V_{COMP}),
un générateur de courant (32) couplé audit convertisseur de puissance (19) pour recevoir la première tension de détection (Vᵢₙᵥ) provenant de celui-ci, en outre couplé audit condensateur de comparaison (C_{COMP}), et servant à absorber le courant provenant dudit condensateur de comparaison (C_{COMP}) ou à délivrer le courant audit condensateur de comparaison (C_{COMP}) sur la base de la première tension de détection (Vᵢₙᵥ), ledit générateur de courant (32) commençant à absorber le courant provenant dudit condensateur de comparaison (C_{COMP}) de façon à décharger ledit condensateur de comparaison (C_{COMP}) lorsqu'il est déterminé que la première tension de détection (Vᵢₙᵥ) est supérieure à une première tension de référence transitoire rapide (V_{FT_ref1}) prédéterminée, ledit générateur de courant (32) commençant à délivrer le courant audit condensateur de comparaison (C_{COMP}) de façon à charger ledit condensateur de comparaison (C_{COMP}) lorsqu'il est déterminé que la première tension de détection (Vᵢₙᵥ) est inférieure à une deuxième tension de référence transitoire rapide (V_{FT_ref2}) prédéterminée, la deuxième tension de référence transitoire rapide (V_{FT_ref2}) prédéterminée étant inférieure à la première tension de référence transitoire rapide (V_{FT_ref1}), ledit générateur de courant (32) générant en outre un signal d'activation d'absorption (V_{FTC_Sink}) sur la base de la première tension de détection (Vᵢₙᵥ), l'absorption de courant effectuée par ledit générateur de courant (32) étant liée au signal d'activation d'absorption (V_{FTC_Sink}),
un circuit de détection de front de descente (52) pour recevoir un signal d'activation de rafale (BE), couplé audit générateur de courant (32) pour recevoir le signal d'activation d'absorption (V_{FTC_Sink}) provenant de celui-ci, et détecter les fronts de descente respectifs du signal d'activation de rafale (BE) et du signal d'activation d'absorption (V_{FTC_Sink}) pour générer un deuxième signal d'indication (FEI), et
un générateur de signal d'impulsion (40) couplé audit condensateur de comparaison (C_{COMP}) pour recevoir la tension de comparaison (V_{COMP}) provenant de celui-ci, en outre couplé audit circuit de détection de front de descente (52) pour recevoir le deuxième signal d'indication (FEI) provenant de celui-ci, en outre couplé audit convertisseur de puissance (19), et générer le signal d'impulsion (V_{GATE}) pour une réception par ledit convertisseur de puissance (19) sur la base de la tension de comparaison (V_{COMP}) et du deuxième signal d'indication (FEI) de telle manière que la largeur d'impulsion du signal d'impulsion (V_{GATE}) est liée à la tension de comparaison (V_{COMP}) et qu'un point de début d'impulsion du signal d'impulsion (V_{GATE}) est lié au front de descente de l'un quelconque du signal d'activation de rafale (BE) et du signal d'activation d'absorption (V_{FTC_Sink}).

2. Système de régulateur de tension selon la revendication 1, **caractérisé en ce que** :
ledit convertisseur de puissance (19) génère en outre une deuxième tension de détection (V_{S}) liée à une transition du signal d'impulsion (V_{GATE}) ;
ledit dispositif de commande (20) comporte en outre un circuit de déclenchement d'impulsion (51) qui est couplé audit convertisseur de puissance (19) pour recevoir la deuxième tension de détection (Vₛ) provenant de celui-ci, et qui génère un premier signal d'indication (V_{S_shot}) sur la base d'une comparaison entre la deuxième tension de détection (Vₛ) et une tension de référence de seuil (V_{ref_Vs}) prédéterminée ;
ledit générateur de signal d'impulsion (40) est en outre couplé audit circuit de déclenchement d'impulsion (51) pour recevoir le premier signal d'indication (V_{S_shot}) provenant de celui-ci, et génère le signal d'impulsion (V_{GATE}) en outre sur la base du premier signal d'indication (V_{S_shot}) de telle manière que le point de début d'impulsion du signal d'impulsion (V_{GATE}) est en outre lié au premier signal d'indication (V_{S_shot}).

3. Système de régulateur de tension selon la revendication 2, **caractérisé en ce que** ledit circuit de déclenchement d'impulsion (51) comporte :
un comparateur (511) ayant une borne d'entrée non inverseuse qui est destinée à recevoir la tension de référence de seuil (V_{ref_Vs}) prédéterminée, une borne d'entrée inverseuse qui est couplée audit convertisseur de puissance (19) pour recevoir la deuxième tension de détection (Vₛ) provenant de celui-ci, et une borne de sortie ;
un élément de retard (512) ayant une borne d'entrée qui est couplée à ladite borne de sortie dudit comparateur (511), et une borne de sortie ;
un onduleur (513) ayant une borne d'entrée qui est couplée à ladite borne de sortie dudit élément de retard (512), et une borne de sortie ; et
une porte ET (514) ayant une première borne d'entrée qui est couplée à ladite borne de sortie dudit onduleur (513), une deuxième borne d'entrée qui est couplée à ladite borne de sortie dudit comparateur (511), et une borne de sortie qui est couplée audit générateur de signal d'impulsion (40) et qui fournit le premier signal d'indication (V_{S_shot}).

4. Système de régulateur de tension selon l'une quelconque des revendications 1 à 3, **caractérisé en ce que** :
ledit convertisseur de puissance (19) génère en outre une deuxième tension de détection (Vₛ) liée à la tension de sortie (Vₒᵤₜ);
ledit dispositif de commande (20) comporte en outre un circuit en mode rafale (50) ;
ledit circuit en mode rafale (50) est couplé audit condensateur de comparaison (V_{COMP}), audit convertisseur de puissance (19) et audit générateur de signal d'impulsion (40) pour recevoir la tension de comparaison (V_{COMP}), la deuxième tension de détection (V_{S}) et le signal d'impulsion (V_{GATE}) provenant respectivement de celui-ci;
ledit circuit en mode rafale (50) génère le signal d'activation de rafale (BE) et un signal de désactivation de rafale (BD) sur la base d'une comparaison entre la tension de comparaison (V_{COMP}) et une première tension de référence de rafale (V_{Burst_ref1}) prédéterminée lorsque ledit convertisseur de puissance (19) n'absorbe pas le courant provenant dudit condensateur de comparaison (C_{COMP}), et sur la base d'une comparaison entre la deuxième tension de détection (Vₛ) et une deuxième tension de référence de rafale (V_{Burst_ref2}) prédéterminée lors de la détection d'un front de descente du signal d'impulsion (V_{GATE}) ;
le signal d'activation de rafale (BE) et le signal de désactivation de rafale (BD) sont complémentaires l'un avec l'autre ; et
ledit générateur de signal d'impulsion (40) est en outre destiné à recevoir le signal d'activation de rafale (BE) provenant dudit circuit en mode rafale (50), et génère le signal d'impulsion (V_{GATE}) en outre sur la base du signal d'activation de rafale (BE).

5. Système de régulateur de tension selon la revendication 4, **caractérisé en ce que** :
ledit circuit en mode rafale (50) comporte
un premier comparateur (331) ayant une borne d'entrée non inverseuse qui est destinée à recevoir la première tension de référence de rafale (V_{Burst_ref1}) prédéterminée, une borne d'entrée inverseuse qui est couplée audit condensateur de comparaison (V_{COMP}) pour recevoir la tension de comparaison (V_{COMP}) provenant de celui-ci, et une borne de sortie ;
un onduleur (337) ayant une borne d'entrée qui est couplée audit générateur de courant (32) pour recevoir le signal d'activation d'absorption (V_{FTC_Sink}) provenant de celui-ci, et une borne de sortie ;
une première porte ET (338) ayant une première borne d'entrée qui est couplée à ladite borne de sortie dudit premier comparateur (331), une deuxième borne d'entrée qui est couplée à ladite borne de sortie dudit onduleur (337), et une borne de sortie ;
un élément de retard (332) ayant une borne d'entrée qui est couplée à ladite borne de sortie de ladite première porte ET (338), et une borne de sortie ;
un deuxième comparateur (334) ayant une borne d'entrée non inverseuse qui est destinée à recevoir la deuxième tension de référence de rafale (V_{Burst_ref2}) prédéterminée, une borne d'entrée inverseuse qui est couplée audit convertisseur de puissance (19) pour recevoir la deuxième tension de détection (Vₛ) provenant de celui-ci, et une borne de sortie ;
un détecteur de front de descente (335) ayant une borne d'entrée qui est couplée audit générateur de signal d'impulsion (40) pour recevoir le signal d'impulsion (V_{GATE}) provenant de celui-ci, et une borne de sortie ;
une deuxième porte ET (336) ayant une première borne d'entrée qui est couplée à ladite borne de sortie dudit deuxième comparateur (334), une deuxième borne d'entrée qui est couplée à ladite borne de sortie dudit détecteur de front de descente (335), et une borne de sortie ; et
une bascule RS (333) ayant une borne de réglage qui est couplée à ladite borne de sortie dudit élément de retard (332), une borne de réinitialisation qui est couplée à ladite borne de sortie de ladite deuxième porte ET (336), une borne de sortie non inverseuse qui est couplée audit générateur de signal d'impulsion (40) et qui fournit le signal d'activation de rafale (BE), et une borne de sortie inverseuse qui fournit le signal de désactivation de rafale (BD).

6. Système de régulateur de tension selon l'une quelconque des revendications 1 à 5, **caractérisé en ce que** :
ledit dispositif de commande (20) comporte en outre un circuit de hoquet (31) qui est couplé audit convertisseur de puissance (19) pour recevoir la première tension de détection (Vᵢₙᵥ) provenant de celui-ci, et qui génère un signal de hoquet (HICCUP) sur la base d'une comparaison entre la première tension de détection (Vᵢₙᵥ) et une troisième tension de référence de rafale (V_{Burst_ref3}) prédéterminée, et sur la base d'une comparaison entre la première tension de détection (Vᵢₙᵥ) et une quatrième tension de référence de rafale (V_{Burst_ref4}) prédéterminée, la quatrième tension de référence de rafale (V_{Burst_ref4}) prédéterminée étant supérieure à la troisième tension de référence de rafale (V_{Burst_ref3}) prédéterminée ; et
ledit générateur de signal d'impulsion (40) est en outre couplé audit circuit de hoquet (31) pour recevoir le signal de hoquet (HICCUP) provenant de celui-ci, et génère le signal d'impulsion (V_{GATE}) en outre sur la base du signal de hoquet (HICCUP).

7. Système de régulateur de tension selon la revendication 6, **caractérisé en ce que** ledit circuit de hoquet (31) comporte :
un premier comparateur (301) ayant une borne d'entrée non inverseuse qui est destinée à recevoir la troisième tension de référence de rafale (V_{Burst_ref3}) prédéterminée, une borne d'entrée inverseuse qui est couplée audit convertisseur de puissance (19) pour recevoir la première tension de détection (Vᵢₙᵥ) provenant de celui-ci, et une borne de sortie ;
un deuxième comparateur (302) ayant une borne d'entrée non inverseuse qui est couplée audit convertisseur de puissance (19) pour recevoir le premier signal de détection (Vᵢₙᵥ) provenant de celui-ci, une borne d'entrée inverseuse qui est destinée à recevoir la quatrième tension de référence de rafale (V_{Burst_ref4}) prédéterminée, et une borne de sortie ; et
une bascule RS (303) ayant une borne de réglage qui est couplée à ladite borne de sortie dudit premier comparateur (301), une borne de réinitialisation qui est couplée à ladite borne de sortie dudit deuxième comparateur (302), et une borne de sortie qui est couplée audit générateur de signal d'impulsion (40) et qui fournit le signal de hoquet (HICCUP).

8. Système de régulateur de tension selon la revendication 1, **caractérisé en ce que** ledit circuit de détection de front de descente (52) comporte :
une porte OU (521) ayant une première borne d'entrée qui est destinée à recevoir le signal d'activation de rafale (BE), une deuxième borne d'entrée qui est couplée audit générateur de courant (32) pour recevoir le signal d'activation d'absorption (V_{FTC_Sink}) provenant de celui-ci, et une borne de sortie ;
un onduleur (522) ayant une borne d'entrée qui est couplée à ladite borne de sortie de ladite porte OU (521), et une borne de sortie ;
un élément de retard (523) ayant une borne d'entrée qui est couplée à ladite borne de sortie de ladite porte OU (521), et une borne de sortie ; et
une porte ET (524) ayant une première borne d'entrée qui est couplée à ladite borne de sortie dudit onduleur (522), une deuxième borne d'entrée qui est couplée à ladite borne de sortie dudit élément de retard (523), et une borne de sortie qui est couplée audit générateur de signal d'impulsion (40) et qui fournit le deuxième signal d'indication (FEI).

9. Système de régulateur de tension selon l'une quelconque des revendications 1 à 8, **caractérisé en ce que** ledit générateur de courant (32) comporte :
un premier comparateur (311) ayant une borne d'entrée non inverseuse qui est couplée audit convertisseur de puissance (19) pour recevoir la première tension de détection (Vᵢₙᵥ) provenant de celui-ci, une borne d'entrée inverseuse qui est destinée à recevoir la première tension de référence transitoire rapide (V_{FT_ref1}) prédéterminée, et une borne de sortie ;
un deuxième comparateur (312) ayant une borne d'entrée non inverseuse qui est destinée à recevoir une troisième tension de référence transitoire rapide (V_{FT_ref3}) prédéterminée, une borne d'entrée inverseuse qui est couplée audit convertisseur de puissance (19) pour recevoir la première tension de détection (Vᵢₙᵥ) provenant de celui-ci, et une borne de sortie, la troisième tension de référence transitoire rapide (V_{FT_ref3}) prédéterminée étant inférieure à la première tension de référence transitoire rapide (V_{FT_ref1}) prédéterminée ;
un troisième comparateur (313) ayant une borne d'entrée non inverseuse qui est destinée à recevoir la deuxième tension de référence transitoire rapide (V_{FT_ref2}) prédéterminée, une borne d'entrée inverseuse qui est couplée audit convertisseur de puissance (19) pour recevoir la première tension de détection (Vᵢₙᵥ) provenant de celui-ci, et une borne de sortie ;
un quatrième comparateur (314) ayant une borne d'entrée non inverseuse qui est couplée audit convertisseur de puissance (19) pour recevoir la première tension de détection (Vᵢₙᵥ) provenant de celui-ci, une borne d'entrée inverseuse qui est destinée à recevoir une quatrième tension de référence transitoire rapide (V_{FT_ref4}) prédéterminée, et une borne de sortie, la quatrième tension de référence transitoire rapide (V_{FT_ref4}) prédéterminée étant inférieure à la troisième tension de référence transitoire rapide (V_{FT_ref3}) prédéterminée, et étant supérieure à la deuxième tension de référence transitoire rapide (V_{FT_ref2}) prédéterminée ;
une première bascule RS (315) ayant une borne de réglage qui est couplée à ladite borne de sortie dudit premier comparateur (311), une borne de réinitialisation qui est couplée à ladite borne de sortie dudit deuxième comparateur (312), et une borne de sortie ;
une deuxième bascule RS (316) ayant une borne de réglage qui est couplée à ladite borne de sortie dudit troisième comparateur (313), une borne de réinitialisation qui est couplée à ladite borne de sortie dudit quatrième comparateur (314), et une borne de sortie ;
une première porte ET (322) ayant une première borne d'entrée qui est couplée à ladite borne de sortie de ladite première bascule RS (315), une deuxième borne d'entrée qui est destinée à recevoir un signal de désactivation de rafale (BD), et une borne de sortie ;
une deuxième porte ET (323) ayant une première borne d'entrée qui est couplée à ladite borne de sortie de ladite deuxième bascule RS (316), une deuxième borne d'entrée qui est destinée à recevoir le signal de désactivation de rafale (BD), et une borne de sortie ;
un premier commutateur (319) ayant une première borne qui est couplée audit condensateur de comparaison (C_{COMP}), une deuxième borne, et une borne de commande qui est couplée à ladite borne de sortie de ladite première porte ET (322) ;
un deuxième commutateur (320) ayant une première borne, une deuxième borne qui est couplée audit condensateur de comparaison (C_{COMP}), et une borne de commande qui est couplée à ladite borne de sortie de ladite deuxième porte ET (323) ;
une première source de courant (317) couplée à ladite deuxième borne dudit premier commutateur (319), et fournissant un courant de décharge (I_{discharge}) qui circule à travers ledit premier commutateur (319) de ladite première borne de celui-ci à ladite deuxième borne de celui-ci lorsque ledit premier commutateur (319) conduit ; et
une deuxième source de courant (318) couplée à ladite première borne dudit deuxième commutateur (320), et fournissant un courant de charge (I_{charge}) qui circule à travers ledit deuxième commutateur (320) de ladite première borne de celui-ci à ladite deuxième borne de celui-ci lorsque ledit deuxième commutateur (320) conduit.

10. Système de régulateur de tension selon l'une quelconque des revendications 1 à 9, **caractérisé en ce que** ledit générateur de signal d'impulsion (40) comporte :
un générateur de rampe (41) pour recevoir le signal d'impulsion (V_{GATE}), et générer une tension de rampe (Vᵣₐₘₚ) qui augmente à l'intérieur de chaque impulsion du signal d'impulsion (V_{GATE}) ;
un comparateur (42) couplé audit générateur de rampe (41) et audit condensateur de comparaison (C_{COMP}) pour recevoir la tension de rampe (Vᵣₐₘₚ) et la tension de comparaison (V_{COMP}) provenant respectivement de celui-ci, et comparer la tension de rampe (Vᵣₐₘₚ) et la tension de comparaison (V_{COMP}) pour générer un signal de comparaison ; et
un circuit de commande (43) couplé audit comparateur (42) pour recevoir le signal de comparaison provenant de celui-ci, en outre couplé audit convertisseur de puissance (19), et génère le signal d'impulsion (V_{GATE}) pour une réception par ledit convertisseur de puissance (19) sur la base du signal de comparaison de telle manière que la largeur d'impulsion du signal d'impulsion (V_{GATE}) est liée au signal de comparaison.

11. Système de régulateur de tension selon l'une quelconque des revendications 1 à 10, **caractérisé en ce que** ledit convertisseur de puissance (19) comporte :
un premier circuit de redressement et de filtrage (190) adapté pour être couplé à la source de puissance (7) pour recevoir la tension d'entrée (Vᵢₙ) provenant de celui-ci, et redresser et filtrer la tension d'entrée (Vᵢₙ) pour générer une tension redressée (V_{BR}) ;
un transformateur (191) comportant un enroulement primaire (Nₚ) qui est couplé audit premier circuit de redressement et de filtrage (190) pour recevoir la tension redressée (V_{BR}) provenant de celui-ci, un enroulement secondaire (Nₛ), et un enroulement auxiliaire (Nₐ) qui fournit une tension auxiliaire (V_{AUX});
un commutateur (Q) couplé audit enroulement primaire (Nₚ), en outre couplé audit générateur de signal d'impulsion (40) pour recevoir le signal d'impulsion (V_{GATE}) provenant de celui-ci, et conduire à l'intérieur de chaque impulsion du signal d'impulsion (V_{GATE}) ;
un deuxième circuit de redressement et de filtrage (193) couplé audit enroulement secondaire (Nₛ), adapté pour être en outre couplé à la charge (8), et redresser et filtrer une tension à travers ledit enroulement secondaire (Nₛ) pour générer la tension de sortie (Vₒᵤₜ) pour une réception par la charge (8) ; et
un circuit de détection de tension (192) couplé audit enroulement auxiliaire (Nₐ) pour recevoir la tension auxiliaire (V_{AUX})provenant de celui-ci, et générer la première tension de détection (Vᵢₙᵥ) sur la base de la tension auxiliaire (V_{AUX}).
